(19) Europäisches Patentamt
European Patent Office
Office européen des brevets

(11) **EP 3 767 468 A1**

(12) **DEMANDE DE BREVET EUROPEEN**

(43) Date de publication:
**20.01.2021 Bulletin 2021/03**

(51) Int Cl.:
**G06F 11/07** *(2006.01)* **G06F 11/34** *(2006.01)*
**G06N 20/00** *(2019.01)* **G06F 11/30** *(2006.01)*

(21) Numéro de dépôt: **20185822.2**

(22) Date de dépôt: **14.07.2020**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **15.07.2019 FR 1907982**

(71) Demandeur: **Bull SAS**
**78340 Les Clayes-sous-Bois (FR)**

(72) Inventeurs:
• ROY, Jean-Francois
  38640 Claix (FR)
• SGHIOUER, Kaoutar
  60200 Compiègne (FR)
• PORCHER, Guillaume
  38100 Grenoble (FR)
• SEROUL, Pierre
  38650 Sinard (FR)

(74) Mandataire: **A.P.I. Conseil**
**Immeuble Newton**
**4, rue Jules Ferry**
**64000 Pau (FR)**

(54) **PROCÉDÉ ET DISPOSITIF DE DÉTERMINATION D'UNE VALEUR DE RISQUE D'INCIDENT TECHNIQUE DANS UNE INFRASTRUCTURE INFORMATIQUE À PARTIR DE VALEURS D'INDICATEURS DE PERFORMANCE**

(57) L'invention porte sur un dispositif et un procédé (100) de détermination d'une valeur de risque d'incident technique dans une infrastructure (5), ledit procédé comprenant :
- une étape de réception (120) de valeurs d'indicateurs de performance,
- une étape d'identification (140) d'indicateurs de performance en anomalie, de façon à identifier des valeurs anormales et une identification d'indicateurs de performance associés à ces valeurs anormales,
- une étape de détermination (150) d'indicateurs à risque comportant une identification d'indicateurs de performance de l'infrastructure informatique corrélés aux indicateurs en anomalie identifiés,
- une étape de création (160) d'un vecteur d'anomalies augmenté comportant les identifiants des indicateurs en anomalie identifiés et les identifiants des indicateurs à risque déterminés,
- une étape de détermination (170) comportant la comparaison du vecteur d'anomalies augmenté à des données de références prédéterminées d'incident technique.

FIG. 1

## Description

La présente invention concerne le domaine de la maintenance d'infrastructure informatique. La présente invention concerne un dispositif, un procédé, un programme, et un support de stockage pour la détermination d'une valeur de risque d'incident technique dans une infrastructure informatique.

[Art antérieurl

Les infrastructures informatiques sont composées d'un nombre de plus en plus grand de composants interconnectés que cela soit des composants matériels ou des composants logiciels. Dans ces infrastructures informatiques, la multiplicité de ces composants entraine un risque élevé de défaillance du système. En outre, ces infrastructures informatiques sont souvent hétérogènes et changeantes entrainant une diversité des composants matériels et des composants logiciels d'une part et une évolution de leurs caractéristiques dans le temps d'autre part.

Dans les infrastructures informatiques complexes et distribuées récentes, il est souhaitable de fournir des fonctions autonomes dans le système informatique lui-même pour éliminer la nécessité d'une surveillance permanente du système par un administrateur humain. Cela a conduit au développement de procédés ou de dispositifs de surveillance d'infrastructure informatique permettant d'identifier des anomalies dans les comportements des différents composants matériel ou logiciels de l'infrastructure informatique.

Ainsi, avec ces procédés ou dispositifs de surveillance, un incident technique (e.g. une erreur, un ralentissement, un échec, etc.) qui se produit dans une infrastructure informatique, est susceptible d'être détecté sous la forme d'anomalies dans une ou plusieurs mesures d'indicateurs de performance. Ces mesures peuvent par exemple correspondre à des mesures de performance (par exemple, le temps de réponse moyen du serveur, l'histogramme de distribution horaire du serveur, la page taille du fichier, le nombre de pages lentes, le nombre de transactions, etc.), les paramètres du réseau (par exemple, le débit du réseau, la latence du réseau, etc.), et des mesures système (par exemple, l'utilisation du CPU, utilisation de la mémoire, etc.). Des techniques de surveillance d'indicateurs de performance sont bien connues pour la surveillance d'infrastructures informatiques avec par exemple l'utilisation de sondes telles que des moniteurs de ressources capables de surveiller un système informatique et de fournir des valeurs de performances réseau, applicatif et / ou système.

Néanmoins, dans les infrastructures informatiques complexes et distribuées récentes les valeurs observables d'indicateurs de performance varient fortement au fil du temps, et les techniques dans lesquelles les valeurs observées sont directement utilisées sont difficiles à appliquer parce que les valeurs de seuil de détection ne sont pas efficaces. En outre, un incident apparemment bénin peut déboucher, plusieurs heures ou jours après, sur une défaillance massive de l'installation. Ainsi, il existe un besoin pour une solution capable de traiter les valeurs observées de façon à identifier au plus juste les indicateurs de performance en anomalie.

En outre, les dispositifs ou procédés de surveillance existant se contentent généralement de reporter des anomalies. Or, avec d'une part la complexité et d'autre part la taille croissante des infrastructures informatiques, les services de maintenance sont submergés par des alertes d'anomalie ou de défaillance.

Ainsi, il existe un besoin pour une solution permettant, outre la détection d'anomalie, de déterminer une valeur de risque de défaillance (i.e. d'incident technique) pour l'infrastructure informatique. Plus précisément, il existe un besoin pour de nouvelles solutions permettant la prévision des besoins de maintenance prédictive sur une infrastructure informatique capable de permettre l'intervention du service de maintenance avant le déclenchement de l'interruption de service, de réduire ainsi les temps d'intervention du service de maintenance et de réduire l'occurrence des défaillances sur l'infrastructure informatique surveillée.

**Problème technique]**

L'invention a donc pour but de remédier aux inconvénients de l'art antérieur. En particulier, l'invention a pour but de proposer un dispositif et un procédé de détermination d'une valeur de risque d'incident technique dans une infrastructure, lesdits procédé et dispositif permettant de déterminer un risque de défaillance à partir de signaux faibles. Le procédé étant en outre apte à évoluer de façon à prendre en compte les modifications de l'infrastructure. L'invention a également pour but de proposer un dispositif capable d'exécuter un tel procédé ainsi qu'un programme et un support d'enregistrement portant ce programme.

**[Description succincte]**

A cet effet, un premier aspect de l'invention propose un procédé de détermination d'une valeur de risque d'incident technique dans une infrastructure informatique, ledit procédé étant exécuté par un dispositif informatique, ledit dispositif informatique comportant un module de traitement de données, un module de stockage configuré pour mémoriser au moins une base de corrélation, ladite base de corrélation comportant des données de corrélation entre indicateurs de performance, et un module de collecte, ledit procédé comprenant :

- une étape de réception, par le module de collecte, de valeurs d'indicateurs de performance d'une infrastructure informatique,
- une étape d'identification d'indicateurs de performance en anomalie, par le module de traitement de données, ladite identification comportant une analyse des valeurs d'indicateurs de performance de façon à identifier des valeurs anormales et des indicateurs de performance associés à ces valeurs anormales,
- une étape de détermination d'indicateurs à risque, par le module de traitement de données à partir de la base de corrélation, ladite détermination comportant une identification d'indicateurs de performance de l'infrastructure informatique corrélés aux indicateurs en anomalie identifiés,
- une étape de création, par le module de traitement de données, d'un vecteur d'anomalies augmenté, ledit vecteur d'anomalies augmenté comportant des valeurs associées aux indicateurs en anomalie identifiés et des valeurs associées aux indicateurs à risque déterminés, et
- une étape de détermination, par le module de traitement de données, d'une valeur de risque d'incident technique dans l'infrastructure informatique, ladite étape de détermination comportant une comparaison du vecteur d'anomalies augmenté à des données de références prédéterminées d'incident technique.

Un tel procédé permet, grâce à la détermination d'une valeur de risque d'incident, de prévoir la survenue d'un incident technique au sein d'une infrastructure informatique. L'anticipation des incidents est rendue complexe du fait de la grande variabilité des métriques de fonctionnement de ces infrastructures. Ici, le procédé prend avantage du haut niveau d'interdépendance des composants logiciels et matériel sur les infrastructures informatiques rendant le management de ces infrastructures hautement complexe.

En particulier, la collecte de valeurs de métriques (i.e. indicateurs de performance) et leur traitement permet de détecter un ou plusieurs indicateurs de performance en anomalie à partir de valeurs anormales puis d'enrichir ces indicateurs de performance en anomalie avec des données relatives à des indicateurs de performance à risque de devenir en anomalie. Les vecteurs d'anomalies augmentés générés peuvent alors être comparés à des données préenregistrées relatives aux incidents techniques (tels que des seuils ou des vecteurs connus). Avantageusement, la détection et le traitement d'une valeur anormale peuvent être réalisés en continu et en temps réel.

Ainsi, un procédé selon l'invention permet, grâce à la génération d'un vecteur d'anomalies augmenté, de détecter et prévoir des défaillances à partir de signaux faibles qui auraient échappé aux services de suivi (ou qui ont déjà échappé à la vigilance des services de surveillance).

**Selon d'autres caractéristiques optionnelles du procédé :**

- l'étape d'identification d'indicateurs de performance en anomalie est précédée par une étape de prétraitement de valeurs d'indicateurs de performance collectées, ladite étape de prétraitement des valeurs d'indicateurs de performance collectées comportant une suppression d'une composante normale. Cette composante normale est par exemple prise en compte heure par heure, jour par jour avec une répétition hebdomadaire. Néanmoins selon les indicateurs, la période de répétition et la fréquence d'échantillonnage peuvent être ajustées. Par exemple, si des données sur plusieurs années sont disponibles alors la composante mensuelle pourrait être prise en compte.
- l'identification des valeurs anormales est réalisée par une méthode statistique permettant de générer des valeurs de distance à la normalité. Cette méthode simple et rapide permet d'obtenir de bons résultats dans le cadre de l'invention.
- les valeurs de références prédéterminées d'incident technique sont des vecteurs de références. Cela permet d'améliorer la justesse du procédé selon l'invention.
- l'étape d'identification d'indicateurs de performance de l'infrastructure informatique corrélés aux indicateurs en anomalie identifiés est réalisée sur la base de corrélations causales inter-indicateurs de performance. Par exemple, la base de corrélation peut mémoriser aussi des liens de causalité et ces liens de causalité peuvent être étiquetés de façon différenciée par rapport aux liens de corrélations non causale.
- le vecteur d'anomalies augmenté comporte en outre des indicateurs à risque de deuxième niveau, lesdits indicateurs à risque de deuxième niveau étant des indicateurs de performance de l'infrastructure informatique corrélés aux indicateurs à risques.
- le vecteur d'anomalies augmenté comporte en outre, pour chacun des indicateurs à risque, une valeur de durée estimée avant passage en anomalie.
- il comporte en outre une étape de détermination d'une durée estimée avant un incident, ladite étape comportant un calcul, à partir de valeurs de durée avant passage en anomalie des indicateurs à risque identifiés, d'un plus court chemin entrainant un risque d'incident technique. Le plus court chemin peut alors correspondre à un chemin menant à une défaillance pour laquelle la somme des durées avant passage en anomalie est la plus courte.

- il comporte en outre une étape de détermination, par le module de traitement de données, d'une valeur d'indice de performance de prédiction d'anomalies comportant : une réception de nouvelles valeurs d'indicateurs de performance ; une identification de nouveaux indicateurs de performance en anomalie confirmés, ladite identification comportant une analyse des nouvelles valeurs d'indicateurs de performance de façon à identifier des valeurs anormales et des indicateurs de performance associés à ces valeurs anormales, et une comparaison des indicateurs à risque identifiés aux nouveaux indicateurs de performance en anomalie confirmés de façon à générer une valeur d'indice de performance de prédiction d'anomalies. Une telle étape permet, grâce à la détermination d'un indice de performance, de vérifier si l'anticipation de la survenue d'un incident technique au sein d'une infrastructure informatique est correcte. Avantageusement, la vérification peut être réalisée en continu et en temps réel. Ainsi, un procédé selon l'invention permet d'évaluer au cours du temps la performance de prédiction d'un procédé de maintenance prédictive dédié à la détection et prévision des défaillances à partir de signaux faibles.

- il comporte en outre une étape de génération de valeurs de durée avant passage en anomalie actualisées, une valeur de durée avant passage en anomalie correspondant à une durée entre une survenue d'une valeur anormale pour l'indicateur de performance concerné et une survenue d'une valeur anormale pour un indicateur de performance corrélé à l'indicateur de performance concerné. Dans le cas de valeurs de durée avant passage en anomalie actualisées cela correspond à la durée entre le passage en anomalie d'un indicateur de performance en anomalie et le passage en anomalie d'un indicateur de performance à risque lui étant corrélé. Ainsi, le procédé permet d'acquérir des données réelles et en temps réel sur la dynamique de progression des anomalies pouvant conduire à un incident technique.

- la base de corrélation comporte des valeurs de durées avant passage en anomalie entre indicateurs de performance, et le procédé comporte en outre une étape de modification des valeurs de durées avant passage en anomalie entre indicateurs de performance mémorisées dans la base de corrélation en fonction des valeurs de durée avant passage en anomalie actualisées. Ainsi, il est possible au cours du temps et de préférence en continu de mettre à jours les éléments utilisés dans la prédiction d'anomalies et/ou d'incident technique. Le procédé selon l'invention sera alors plus juste et peu sensible aux évolutions de l'infrastructure informatique ou de son utilisation.

L'invention porte en outre sur un programme d'ordinateur pour la détermination d'une valeur de risque d'incident technique dans une infrastructure informatique, apte à, de préférence configuré pour, faire exécuter un procédé de détermination selon l'invention.

L'invention porte en outre sur un support d'enregistrement sur lequel est enregistré un programme pour la détermination d'une valeur de risque d'incident technique selon l'invention.

L'invention porte en outre sur un dispositif informatique de détermination d'une valeur de risque d'incident technique dans une infrastructure informatique, ledit dispositif informatique comportant un module de traitement de données, un module de stockage configuré pour mémoriser au moins une base de corrélation comportant des données de corrélation entre indicateurs de performance et un module de collecte apte à, de préférence configuré pour, recevoir des valeurs d'indicateurs de performance de l'infrastructure informatique, ledit module de traitement de données étant configuré pour exécuter les étapes suivantes :

- une étape d'identification d'indicateurs de performance en anomalie, ladite identification comportant une analyse des valeurs d'indicateurs de performance de façon à identifier des valeurs anormales et des indicateurs de performance associés à ces valeurs anormales,

- une étape de détermination d'indicateurs à risque, à partir de la base de corrélation, ladite détermination comportant une identification d'indicateurs de performance de l'infrastructure informatique corrélés aux indicateurs en anomalie identifiés,

- une étape de création d'un vecteur d'anomalies augmenté, ledit vecteur d'anomalies augmenté comportant des données relatives aux indicateurs en anomalie identifiés et des valeurs associées aux indicateurs à risque déterminés, et

- une étape de détermination d'une valeur de risque d'incident technique, ladite étape de détermination comportant une comparaison du vecteur d'anomalies augmenté à des valeurs de références prédéterminées d'incident techniques.

D'autres avantages et caractéristiques de l'invention apparaitront à la lecture de la description suivante donnée à titre d'exemple illustratif et non limitatif, en référence aux Figures annexées :

[Fig 1] représente une illustration schématique d'un procédé de détermination d'une valeur de risque d'incident technique sur une infrastructure informatique selon l'invention. Les étapes encadrées par des pointillés sont facultatives.

[Fig 2] représente une illustration schématique d'un processus préalable d'apprentissage.

[Fig 3] représente un schéma d'un dispositif de détermination d'une valeur de risque d'incident technique dans une infrastructure informatique selon l'invention.

Des aspects de la présente invention sont décrits en référence à des organigrammes et / ou à des schémas fonctionnels de procédés, d'appareils (systèmes) et de produits de programme d'ordinateur selon des modes de réalisation de l'invention. Sur les figures, les organigrammes et les schémas fonctionnels illustrent l'architecture, la fonctionnalité et le fonctionnement d'implémentations possibles de systèmes, de procédés et de produits de programme d'ordinateur selon divers modes de réalisation de la présente invention. A cet égard, chaque bloc dans les organigrammes ou blocs-diagrammes peut représenter un système, un dispositif, un module ou un code, qui comprend une ou plusieurs instructions exécutables pour mettre en œuvre la ou les fonctions logiques spécifiées. Dans certaines implémentations, les fonctions associées aux blocs peuvent apparaître dans un ordre différent que celui indiqué sur les figures. Par exemple, deux blocs montrés successivement peuvent, en fait, être exécutés sensiblement simultanément, ou les blocs peuvent parfois être exécutés dans l'ordre inverse, en fonction de la fonctionnalité impliquée. Chaque bloc des schémas de principe et / ou de l'organigramme, et des combinaisons de blocs dans les schémas de principe et / ou l'organigramme, peuvent être mis en œuvre par des systèmes matériels spéciaux qui exécutent les fonctions ou actes spécifiés ou effectuer des combinaisons de matériel spécial et d'instructions informatiques.

**[Description de l'invention]**

Dans la suite de la description, l'expression « **vecteur d'anomalie** » au sens de l'invention, correspond à un objet, ou à une structure de données, tel qu'un tableau à une dimension comportant des données relatives à des indicateurs de performance en anomalie (e.g. associés à ces données anormales) et/ou normaux. La représentation sous forme de vecteur est une représentation des données permettant par exemple d'avoir recours à des opérations de calcul matriciel, optimisés en termes de complexité de calcul et mémoire. Néanmoins il est à noter que ce n'est généralement pas le vecteur en lui-même qui détermine les indicateurs à risque. L'expression « **vecteur d'anomalie augmenté** » au sens de l'invention, correspond un vecteur d'anomalie comportant des données relatives à des indicateurs de performance en anomalie, ainsi que des données relatives à des indicateurs de performance à risque, lesdits indicateurs de performance à risque étant associés à des valeurs anormales qui risquent d'être générées par une infrastructure informatique. Un vecteur (e.g. d'anomalie augmenté) selon l'invention peut présenter plusieurs dimensions, s'apparenter alors à une ou plusieurs matrices et peut contenir des nombres tels que des entiers, des booléens, des valeurs alphanumériques, etc.

Ainsi, un vecteur selon l'invention peut prendre en particulier la forme de dictionnaires ou de listes chainées.

L'expression « **passage en anomalie** » au sens de l'invention, peut correspondre à un instant où une métrique ou une pluralité de métriques (liées entre elles ou non) présentent un risque ou un résultat obtenu par calcul, de dépassement d'un seuil prédéterminé ou indicatif d'un risque de défaillance ou d'incident technique sur l'infrastructure informatique.

L'expression « **incident technique** » ou le terme « **défaillance** » au sens de l'invention, correspondent à un ralentissement ou un arrêt de fonctionnement d'une partie au moins de l'infrastructure informatique et de ses applications. Un incident technique peut être causé par une erreur réseau, un échec de processus ou encore une défaillance d'une partie du système.

L'expression « **infrastructure informatique** » au sens de l'invention correspond à un ensemble de structures informatiques (i.e. dispositifs informatiques) apte à faire fonctionner une application ou une chaine applicative. L'infrastructure informatique peut être un ou plusieurs serveurs, ordinateurs, ou encore contrôleurs industriels. Ainsi, l'infrastructure informatique peut correspondre à un ensemble d'éléments comportant un processeur, une interface de communication et de la mémoire.

Par « **sonde** » ou « **sonde informatique** », on entend au sens de l'invention un dispositif, logiciel ou processus associé à un équipement qui permet d'effectuer, de gérer et/ou de faire remonter vers un équipement informatique des mesures des valeurs d'indicateurs de performance tels que des paramètres d'un système. Cela peut correspondre au sens large à des valeurs sur l'utilisation de ressources, des valeurs de paramètres d'exécution d'applications ou encore des valeurs de l'état de fonctionnement des ressources. Une sonde selon l'invention englobe donc également les logiciels ou processus capable de générer des journaux applicatifs ou des historiques des événements (« log file » en terminologie anglosaxonne). En outre, les sondes peuvent aussi correspondre à des capteurs physiques tels que des capteurs de température, d'humidité, de fuites d'eau, de consommation électrique, de mouvement, d'air conditionné, et de fumée.

L'expression « **indicateur de performance** » ou « métrique » au sens de l'invention, correspond à une propriété technique ou fonctionnelle d'un ou de plusieurs éléments d'une infrastructure informatique ou de son environnement représentant les conditions ou l'état de fonctionnement de ladite infrastructure informatique. En outre, un indicateur de performance peut correspondre à une combinaison de propriétés ou à des transformations mathématiques de propriétés. Par exemple, un indicateur de performance peut correspondre à la dérivée d'une propriété d'un élément de l'infrastructure informatique ou bien à un rapport entre les propriétés de deux éléments de l'infrastructure informatique.

L'expression « valeur de l'**indicateur de performance** » ou « valeur de la métrique » au sens de l'invention, correspond à une valeur de mesure ou de calcul d'une propriété technique ou fonctionnelle d'un ou de plusieurs éléments d'une infrastructure informatique représentant l'état de fonctionnement de ladite infrastructure informatique.

L'expression « **valeur associée à un indicateur de performance** » au sens de l'invention, correspond à une valeur d'un paramètre en lien avec un indicateur de performance. Cela peut correspondre à un identifiant d'un indicateur de performance, à une durée avant défaillance d'un indicateur, une valeur booléenne, ou encore le résultat d'une mesure visant à quantifier cet indicateur de performance. De préférence, une valeur associée à un indicateur de performance est un identifiant unique.

Le terme « **ressource** » au sens de l'invention correspond à des paramètres, des capacités ou des fonctions de dispositifs informatiques permettant le fonctionnement d'un système ou d'un processus applicatif. Un même dispositif informatique est associé généralement à plusieurs ressources. De même, une même ressource peut être partagée entre plusieurs processus applicatifs. Une ressource est généralement associée à un identifiant unique permettant de l'identifier au sein d'une infrastructure informatique. Par exemple, le terme « ressource » peut inclure : des disques réseaux caractérisés par des indicateurs de performance tels que par exemple par leurs entrées/sorties, la lecture/écriture sur des disques, des mémoires caractérisées par un indicateur de performance tel que le taux d'utilisation, un réseau caractérisé par sa bande passante, un processeur caractérisé par exemple par son utilisation (en pourcent) ou le taux d'occupation de ses caches, une mémoire vive caractérisée par la quantité allouée. On entend par « **utilisation des ressources** », la consommation d'une ressource par exemple par une application métier.

Le terme « **corrélation** » au sens de l'invention correspond à une relation statistique, causale ou non, entre deux variables ou les valeurs de deux variables. Au sens le plus large, toute association statistique est une corrélation mais ce terme désigne par exemple la proximité entre deux variables et l'établissement d'une relation d'ordre. Le terme « causale » ou « causalité » au sens de l'invention correspond à une relation statistique causale entre deux variables ou les valeurs de deux variables. En particulier, une des variables est une cause qui est entièrement ou partiellement responsable de la valeur de l'autre variable au travers d'un effet. La valeur de première variable peut par exemple être considérée comme une cause d'une valeur (actuelle ou future) de la seconde variable. Que cela soit pour la corrélation ou la causalité, une ou plusieurs variables peuvent avoir une relation statistique avec une ou plusieurs autres variables. En outre, une corrélation ou causalité indirect(e) au sens de l'invention correspond à l'existence d'une chaine de lien de corrélation ou de causalité entre une première variable et une autre variable. Par exemple, une première variable est corrélée à une seconde variable qui est elle-même corrélée à une troisième variable qui est enfin corrélée avec une autre variable.

Le terme « **apprentissage** » au sens de l'invention correspond à un procédé conçu pour définir une fonction f permettant de calculer une valeur de Y à partir d'une base de n observations labelisées (X1... n, Y1... n) ou non labelisées (X1... n). L'apprentissage peut être dit supervisé lorsqu'il se base sur des observations labelisées et non supervisé lorsqu'il se base sur des observations non labelisées. Dans le cadre de la présente invention, l'apprentissage est avantageusement utilisé pour la calibration du procédé et donc son adaptation à une infrastructure informatique particulière.

On entend par **«traiter», «calculer», «exécuter», «déterminer», «afficher», « extraire », « comparer »** ou plus largement « **opération exécutable** », au sens de l'invention, une action effectuée par un dispositif ou un processeur sauf si le contexte indique autrement. À cet égard, les opérations se rapportent à des actions et / ou des processus d'un système de traitement de données, par exemple un système informatique ou un dispositif informatique électronique, qui manipule et transforme les données représentées en tant que quantités physiques (électroniques) dans les mémoires du système informatique ou d'autres dispositifs de stockage, de transmission ou d'affichage de l'information. Ces opérations peuvent se baser sur des applications ou des logiciels.

Les termes ou expressions « **application** », « **logiciel** », « **code de programme** », et « **code exécutable** » signifient toute expression, code ou notation, d'un ensemble d'instructions destinées à provoquer un traitement de données pour effectuer une fonction particulière directement ou indirectement (e.g. après une opération de conversion vers un autre code). Les exemples de code de programme peuvent inclure, sans s'y limiter, un sous-programme, une fonction, une application exécutable, un code source, un code objet, une bibliothèque et/ou tout autre séquence d'instructions conçues pour l'exécution sur un système informatique.

On entend par « **processeur** », au sens de l'invention, au moins un circuit matériel configuré pour exécuter des opérations selon des instructions contenues dans un code. Le circuit matériel peut être un circuit intégré. Des exemples d'un processeur comprennent, sans s'y limiter, une unité de traitement central, un processeur graphique, un circuit intégré spécifique à l'application (ASIC) et un circuit logique programmable.

On entend par « **couplé** », au sens de l'invention, connecté, directement ou indirectement avec un ou plusieurs éléments intermédiaires. Deux éléments peuvent être couplés mécaniquement, électriquement ou liés par un canal de communication.

L'expression « **interface homme-machine** » au sens de l'invention correspond à tout élément permettant à un être humain de communiquer avec un ordinateur en particulier et sans que cette liste soit exhaustive, un clavier et des moyens permettant en réponse aux ordres entrés au clavier d'effectuer des affichages et éventuellement de sélectionner à l'aide de la souris ou d'un pavé tactile des éléments affichés sur l'écran. Un autre exemple de réalisation est un écran tactile permettant de sélectionner directement sur l'écran les éléments touchés par le doigt ou un objet et éventuellement avec la possibilité d'afficher un clavier virtuel.

L'expression « **objet connecté** » au sens de l'invention, correspond à un objet électronique connecté, par une connexion filaire ou sans fil, à un réseau de transport de données, de manière que l'objet connecté puisse partager des données avec un autre objet connecté, un serveur, un ordinateur fixe ou mobile, une tablette électronique, un smartphone ou tout autre dispositif connecté d'un réseau donné. De manière connue en soi, de tels objets connectés peuvent être, par exemple, des tablettes, des dispositifs d'éclairage intelligents, des outils industriels ou encore des smartphones.

Dans la suite de la description, les mêmes références sont utilisées pour désigner les mêmes éléments.

Comme cela a été mentionné, il existe de nombreux systèmes de maintenance d'infrastructure informatique. Néanmoins, les systèmes existants se contentent d'analyser un ou plusieurs indicateurs clés de la performance d'une infrastructure informatique et d'alerter une équipe de maintenance lorsque des valeurs de ce ou ces indicateurs dépassent des valeurs seuils ou présentent un comportement identifié précédemment comme source d'incident technique.

Ainsi, avec les méthodes de l'art antérieur, il est fréquent que l'équipe de maintenance soit informée relativement tard pour cause d'un manque de sensibilité de la méthode ou que l'alerte constitue une fausse alerte car le seuil préétabli est trop faible pour présenter une forte spécificité et donc discriminer efficacement des valeurs normales de valeurs anormales.

Comme cela sera détaillé par la suite, les inventeurs ont développé un dispositif et un procédé de détermination d'une valeur de risque d'incident technique présentant un équilibre entre spécificité et sensibilité. Avantageusement, le dispositif et le procédé de détermination d'une valeur de risque d'incident technique selon l'invention présenteront une spécificité supérieure à la sensibilité. En effet, bien que la sensibilité soit importante car elle est un indicateur de la proportion d'incidents réels prédits, la spécificité est encore plus importante car elle indique la capacité à ne pas sursolliciter les opérateurs avec de fausses alertes.

**Pour cela, les inventeurs proposent en particulier un procédé et un dispositif capables de créer un vecteur d'anomalie augmenté comportant des valeurs associées aux indicateurs** en anomalie identifiés mais aussi des valeurs associées à des indicateurs à risque de devenir en anomalie. En effet, au sein d'un système complexe (par exemple un ensemble de serveurs, d'applications ou d'équipements au sein d'un centre de données), certaines anomalies sur une ou des métriques (i.e. indicateur de performance) peuvent être causées par d'autres anomalies survenant sur d'autres métriques, entrainant ainsi un effet de cascade.

En se basant notamment sur des corrélations observées entre indicateurs de performance, l'objectif est en particulier d'identifier :

- un ensemble d'indicateurs de performance comportant des indicateurs de performance présentant des valeurs anormales, et également

- des indicateurs de performance qui présentent des valeurs normales au moment de l'identification des indicateurs de performance en anomalie mais qui ont une probabilité élevée de présenter, dans les minutes ou les heures suivantes, des valeurs anormales.

Ainsi, il est possible de déterminer une valeur de risque d'incident technique permettant à des équipes de maintenance d'intervenir plus rapidement et plus efficacement sur l'infrastructure informatique. Cela permet aussi de prioriser leurs actions.

Comme cela sera décrit par la suite, l'invention trouve en particulier son intérêt dans le suivi d'une infrastructure informatique d'une société de service comportant une pluralité de postes informatiques et de serveurs distribués utilisés par ses employés ou encore dans le suivi d'une infrastructure informatique d'une société mettant à disposition de ses clients des serveurs ou des machines virtuelles. Toutefois, la présente invention pourra tout aussi bien être mise en œuvre dans une infrastructure informatique gérant les capteurs d'une société industrielle ou plus largement une pluralité d'objets connectés décentralisés.

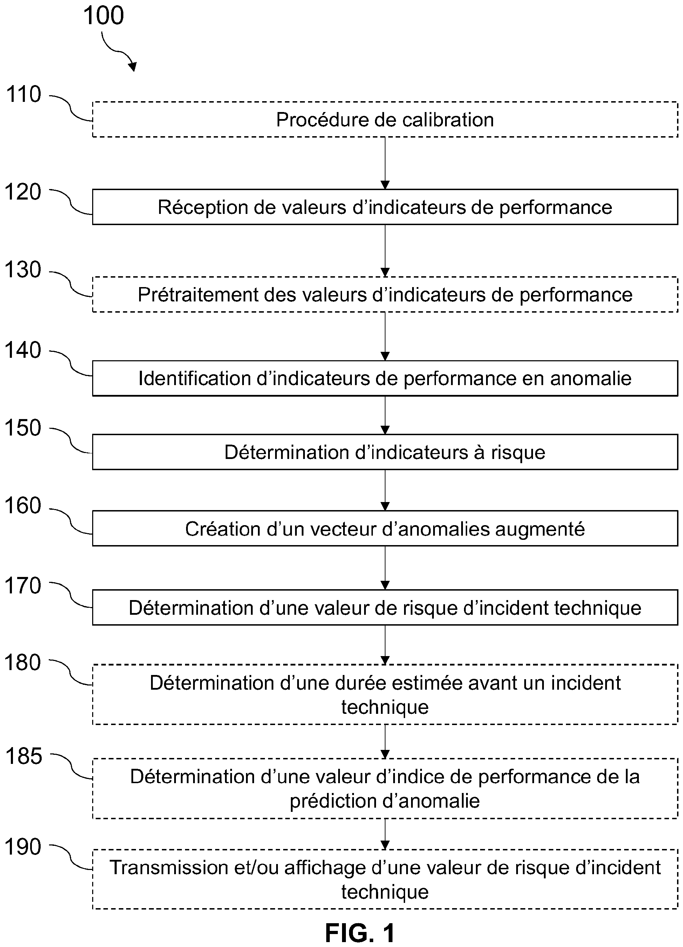

Comme cela est illustré à la **figure 1, selon un premier aspect,** l'invention porte sur un procédé 100 de détermination d'une valeur de risque d'incident technique dans une infrastructure informatique.

Ce procédé de détermination se fonde en particulier sur des valeurs d'indicateurs de performance. Les indicateurs de performance pouvant être utilisés dans le cadre de la présente invention sont par exemple : l'utilisation des ressources, les historique des événements, les erreurs logicielles, les erreurs matérielles, les temps de réponse, le trafic des applications, la charge de service, le trafic réseau, des modifications de fichiers, le nombre d'utilisateurs d'un service, le nombre de session, le nombre de processus, des valeurs de températures, des valeurs d'hygrométrie, et la consommation électrique. En particulier, les indicateurs de performance peuvent inclure : le débit du réseau, la latence du réseau, l'utilisation de CPU, l'utilisation de mémoire, le temps de réponse du serveur, le nombre de pages lentes et/ou le nombre de transactions.

Ces valeurs des indicateurs de performance sont par exemple générées par des sondes informatiques dédiées à la surveillance d'indicateurs de performance de l'infrastructure informatique. De telles sondes informatiques seront décrites en détail par la suite. Ainsi, le procédé peut être réalisé au moins en partie à partir de valeurs d'indicateurs de performance générées par des sondes dédiées à la surveillance d'indicateurs de performance de l'infrastructure informatique.

Dans le cadre d'un procédé selon l'invention, les valeurs des indicateurs de performances sont de préférence mesurées en continu. Le suivi en continu correspond par exemple à des mesures réalisées à une fréquence inférieure ou égale à une heure, de préférence inférieure ou égale à trente minutes, de façon plus préférée inférieure ou égale à cinq minutes, par exemple inférieure ou égale à dix secondes. A noter que tous les indicateurs de performance ne seront pas nécessairement mesurés à une fréquence identique.

En outre, dans le cadre d'un procédé selon l'invention, la valeur de risque d'incident technique dans une infrastructure informatique est de préférence déterminée en temps réel. En particulier, partant de la mesure de valeurs des indicateurs de performances, un procédé selon l'invention est de préférence configuré pour générer une valeur de risque d'incident dans un délai inférieur ou égale à dix minutes, de façon plus préférée inférieur ou égale à cinq minutes, de façon encore plus préférée inférieur ou égale à une minute. Ainsi, un procédé selon l'invention est configuré pour prédire des risques d'incident au moins quinze minutes avant leur occurrence prévue, de façon plus préférée au moins une heure avant leur occurrence prévue et de façon encore plus préférée au moins plusieurs heures avant leur occurrence prévue par exemple au moins trois heures avant leur occurrence prévue.

Comme cela est illustré à la **figure 1,** un procédé de détermination 100 selon l'invention comporte une étape de réception 120 de valeurs d'indicateurs de performance, une étape d'identification 140 d'indicateurs de performance en anomalie, une étape de détermination 150 d'indicateurs à risque, une étape de création 160 d'un vecteur d'anomalies augmenté et une étape de détermination 170 d'une valeur de risque d'incident technique.

En outre, le procédé de détermination selon l'invention peut comporter des étapes de traitement préalable 130 des valeurs d'indicateurs de performance collectées, de transmission et/ou d'affichage 190 d'une valeur de risque d'incident technique.

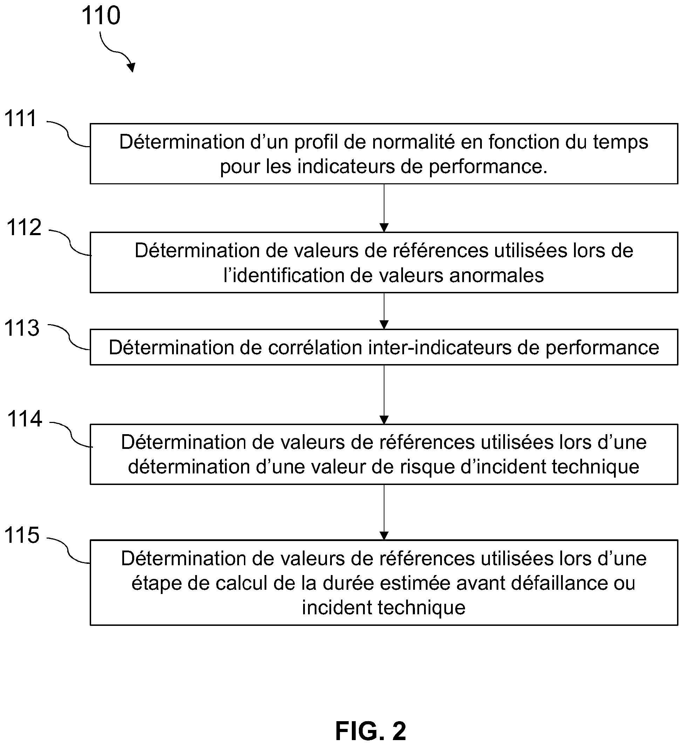

De plus, avantageusement, un procédé de détermination selon l'invention peut comporter également au préalable une procédure de calibration 110. La **figure 2** illustre les étapes possibles de la procédure de calibration 110.

Comme illustré, la procédure de calibration 110 peut comporter une étape de détermination 111 d'un profil de normalité en fonction du temps, une étape de détermination 112 de valeurs de références utilisées lors de l'identification de valeurs anormales, une étape de détermination 113 de corrélation inter-indicateurs de performance, une étape de détermination 114 de valeurs de références utilisées lors d'identification de risque d'incident technique (e.g. détermination d'une valeur de risque d'incident technique) et une étape de détermination 115 des valeurs de références (e.g. durée avant passage anomalie entre indicateurs de performance) utilisées, en tout ou partie, lors du calcul de la durée estimée avant défaillance ou incident technique.

Ces différentes étapes sont au moins en partie basées sur les principes généraux des mathématiques statistiques et plus particulièrement de l'apprentissage, qu'il soit supervisé ou non supervisé. En outre, de façon préférée, ces différentes étapes peuvent inclure des étapes de réduction de la dimensionnalité.

De façon préférée, la procédure de calibration 110 comporte des étapes d'apprentissages supervisés et/ou non supervisés basées sur des valeurs générées à partir de l'infrastructure informatique suivie. Ainsi, les valeurs de références pourront être particulièrement adaptées à l'infrastructure informatique suivie par le procédé et/ou le dispositif selon l'invention.

En outre, la procédure de calibration 110 peut débuter par un prétraitement des valeurs d'indicateurs de performance de façon à en faciliter l'exploitation ultérieure. Un prétraitement selon l'invention peut par exemple comporter : une normalisation des données, un rééchantillonnage, une agrégation de données, et/ou un recodage des variables.

Un tel procédé comporte de préférence une **étape 111 de détermination d'un profil de normalité en fonction du temps.** Ce profil « normal » peut par exemple correspondre à un modèle de la population globale ou à des statistiques récapitulatives de la population globale.

L'utilisation du profil « normal » permet ensuite de détecter les anomalies, les anomalies étant en particulier des observations dont les caractéristiques diffèrent significativement du profil normal par exemple dans le cadre d'une relation d'ordre 1.

De façon préférée, un procédé de détermination selon l'invention peut comporter une étape préalable d'apprentissage des valeurs dites normales d'indicateurs de performance. Il y a, en particulier, un entrainement d'un modèle (i.e. apprentissage) permettant de connaitre les valeurs dites normales en fonction du temps. De préférence, cette étape permet de générer un profil de valeurs pour les indicateurs de performance en fonction du temps. Ainsi, avantageusement, la procédure 110 de calibration comporte la détermination d'un profil de normalité en fonction du temps pour chacun des indicateurs de performance.

La plupart des entreprises suivent dans leur fonctionnement des modèles cycliques, avec des événements qui se reproduisent avec une fréquence horaire, quotidienne, hebdomadaire, mensuelle et parfois annuelle. Il en va de même pour les infrastructures informatiques sous-tendant le fonctionnement de ces entreprises. Le profil de normalité comporte alors de préférence une valeur de période.

Outre la saisonnalité des valeurs dans des données de séries chronologiques, la tendance est un autre facteur important. Ainsi, de façon préférée, la procédure 110 de calibration comporte la détermination 111 d'un profil de normalité en fonction du temps avec une périodicité inférieure ou égale à une année pour les indicateurs de performance ainsi qu'une composante d'évolution globale (i.e. tendance d'évolution des données, à la hausse ou à la baisse). La combinaison de la prise en compte de ces deux facteurs permet une bonne prévision d'une série chronologique.

En effet, les valeurs d'indicateur de performance dans le cadre de série temporelle comporteront généralement une composante normale, une composante de tendance ou variation globale (« trend » en terminologie anglo-saxonne) et un résidu. Dans le cadre de la détection d'anomalie, la composante normale concerne la façon dont les choses changent au cours d'une période donnée, par exemple une année, mois, semaine, jour; la composante de tendance prend en compte la tendance de la façon dont les choses changent ; et c'est la valeur de résidu qui permettra de déterminer avec le plus de précision s'il y a ou non une anomalie. En particulier, les valeurs d'indicateur de performances sont des séries temporelles et sont donc associées à une temporalité (hebdomadaire, quotidien, horaire, mensuel, etc.). Dans ce contexte il existe de nombreuses méthodes permettant d'isoler des valeurs anormales de ces séries temporelles.

Par exemple, un procédé selon l'invention peut mettre en œuvre une décomposition de tendance saisonnière basée sur de la régression locale STL (A Seasonal-Trend Décomposition Procédure Based on Loess. Clevland et al. Journal of Officiai Statistics. Vol. 6. No. I. 1990. pp. 3-73). Cette méthode permet de diviser le signal de série temporelle en trois parties : saisonnière, tendance et résidu. Une telle méthode présente en outre l'avantage de permettre un calcul rapide, même pour de très longues séries chronologiques et de grandes quantités de lissage des tendances et des saisons.

Alternativement, un procédé selon l'invention peut mettre en œuvre une méthode Holt-Winters. Cette méthode permet, à partir d'une valeur de période, de calculer à chaque pas de temps estimé les composantes de résidu, de tendance et de saisonnalité. Le niveau de base initial sera la moyenne tandis que la composante de tendance initiale sera la moyenne de toutes les pentes calculées dans les deux premiers cycles saisonniers.

Une autre méthode appelée ARIMA (« Autoregressive integrated moving average » en terminologie anglo-saxonne) permet de prévoir les valeurs des indicateurs de performance et de participer à la détection des valeurs anormales. La méthode ARIMA est basée sur une approche selon laquelle plusieurs points du passé génèrent une prévision du prochain point avec l'ajout d'une variable aléatoire (e.g. ordre de différentiation) correspondant généralement à du bruit. De même que la méthode Holt-Winters, elle a pour effet de lisser la prédiction de la composante normale et de la composante de tendance. Ainsi, alternativement, un procédé selon l'invention peut mettre en œuvre une méthode ARIMA. Avantageusement, le procédé comporte alors la réception de valeurs de paramètres associés au nombre de différences, au nombre d'autorégressions et aux coefficients d'erreur de prévision de façon à paramétrer la méthode.

En outre, quelle que soit la méthode utilisée pour décomposer le signal en ces trois composantes (i.e. résidu, composante normale et composante de tendance), un procédé selon l'invention peut comporter deux formes différentes de modèles de saisonnalité : la forme additive et la forme multiplicative. En effet, la manière dont ces trois composantes interagissent détermine la différence entre une série temporelle multiplicative et additive.

Dans sa forme additive, la variation de la fluctuation saisonnière d'un indicateur de performance (i.e. métrique) est un nombre constant, tandis que, sous sa forme multiplicative, elle représente un pourcentage de l'indicateur de performance. Ainsi, pour des valeurs plus grandes, la modification du cycle successif sera plus grande dans le cas d'une forme multiplicative.

Dans le cadre d'un modèle additif, les différentes composantes (i.e. normale et tendance) ont une incidence additive sur la série chronologique. Par exemple, dans un modèle de données dont un cycle est constitué par un mois, un modèle additif suppose que la différence entre les valeurs de janvier et de mars est approximativement la même chaque année. En d'autres termes, l'amplitude de l'effet saisonnier est la même chaque année. De même, le modèle suppose que les résidus ont à peu près la même taille dans toute la série. Ils constituent alors un composant aléatoire qui s'ajoute aux autres composants de la même manière pour toutes les parties de la série.

Dans le cadre de la présente invention, les inventeurs ont déterminé que, pour certains indicateurs de performance, un modèle multiplicatif sera plus adapté tandis qu'un modèle additif sera plus adapté pour d'autres indicateurs de performance. De façon préférée, un procédé selon l'invention comporte donc le calcul d'un modèle additif et d'un modèle multiplicatif.

En outre, les séries chronologiques peuvent être analysées et modélisées par des algorithmes tels que STL, ARIMA, LSTM et Holtwinters.

Une fois l'étape de calibration établie, il est possible d'utiliser ces données pour détecter les anomalies en les comparant aux données réelles.

L'identification des valeurs anormales décrite plus tard pourra se reposer au moins en partie sur un calcul d'une composante normale et éventuellement d'une composante de tendance. En effet, la valeur résultante de la suppression/déduction de la composante normale et éventuellement de la composante de tendance à la valeur d'un indicateur de performance consiste en une composante de résidu, qui peut correspondre à une valeur normale ou à une valeur anormale.

La détection de valeurs anormales, ou d'anomalie, comporte généralement l'identification d'un ou de plusieurs points de données très différents du reste des données. Il existe un très grand nombre de méthodes différentes permettant de réaliser une telle détection de valeurs anormales. La plupart se base sur la comparaison de valeurs mesurées à des valeurs de références. De façon à accélérer l'analyse de ces résidus, les inventeurs ont développé une étape préalable de calibration dont le résultat peut être utilisé lors de l'étape d'identification 140 d'indicateurs de performance en anomalie de façon à identifier plus rapidement les valeurs anormales. Ainsi, de façon préférée, la procédure de calibration 110 peut comporter une étape de **détermination 112 de valeurs de références pouvant être utilisées lors de l'identification de valeurs anormales,** et plus particulièrement lors de l'étape d'identification 140 d'indicateurs de performance en anomalie (i.e. présentant des valeurs anormales).

Parmi les nombreuses méthodes possibles pour identifier une valeur anormale, nous pouvons distinguer les approches non supervisées et les approches supervisées.

Une étape de détermination 112 de valeurs de références selon l'invention peut mettre en œuvre une méthode d'apprentissage non supervisée. En effet, alors que la détection d'anomalie peut être résolue par des algorithmes d'apprentissage supervisé si des informations sur le comportement anormal avant la modélisation sont disponibles, lors d'une première mise en place du procédé selon l'invention dans une infrastructure informatique ces informations peuvent manquer et les algorithmes d'apprentissage non supervisés sont privilégiés.

En particulier, la méthode d'apprentissage non supervisée peut reposer sur un modèle probabiliste. Ainsi, une méthode d'apprentissage non supervisée mise en œuvre lors de l'étape de détermination 112 de valeurs de références peut par exemple comporter une recherche des valeurs extrêmes univariées ou une recherche des valeurs extrêmes multivariées. Lorsque l'étape de détermination 112 de valeurs de références selon l'invention comporte une recherche des valeurs extrêmes univariées, cette recherche peut par exemple être réalisée via un Test de Grubb's. Lorsque l'étape de détermination 112 de valeurs de références comporte une recherche des valeurs extrêmes multivariées, cette recherche peut par exemple être réalisée via une évaluation de la distance de Mahalanobis.

La méthode d'apprentissage non supervisée peut reposer sur une notion de proximité. Ainsi, avantageusement, une méthode d'apprentissage non supervisée mise en œuvre lors de l'étape de détermination 112 de valeurs de références peut par exemple comporter une classification non supervisée, un calcul de la densité ou la recherche des plus proches voisins.

La classification non supervisée (« clustering » en terminologie anglosaxonne) n'est pas initialement dédiée à la détection d'observations anormales, puisqu'elle permet essentiellement de déterminer des groupes d'observations. Toutefois, les groupes contenant peu d'observations peuvent être considérés comme correspondant à des observations potentiellement anormales.

En particulier, la classification non supervisée permet de regrouper les données en groupes de densités différentes, les points d'un petit groupe correspondent généralement à des données anormales. Lors de l'étude d'une nouvelle valeur d'indicateur de performance, un procédé selon l'invention pourra comporter un calcul de la distance entre la nouvelle valeur d'indicateur de performance et les groupes. Si la nouvelle valeur est éloignée de tous les autres points des groupes de valeurs normales alors la nouvelle valeur peut être considérée comme une valeur anormale.

Le calcul de la densité peut par exemple correspondre aux algorithmes de type LOF (« Local Outlier Factor » en terminologie anglosaxonne), GLO (« Global-Local Outlier » en terminologie anglosaxonne) ou DBSVM « Density Based Support Vector Machines » en terminologie anglosaxonne). En particulier, le calcul de la densité peut comporter le calcul, pour chaque point, d'une densité de son voisinage local (k) puis le calcul d'un facteur de dépassement local d'un échantillon p comme moyenne des rapports de la densité de l'échantillon p et de la densité de ses plus proches voisins. Les valeurs anormales sont alors des points avec la plus grande valeur de facteur de dépassement local.

Un procédé de détermination selon l'invention peut également mettre en œuvre des approches supervisées pour l'identification de valeurs anormales d'indicateurs de performance. En particulier, une étape de détermination 112 de valeurs de références selon l'invention peut alors comporter la mise en œuvre d'une méthode d'apprentissage supervisée.

Parmi les méthodes d'apprentissage supervisées, les réseaux de neurones, les arbres de classification, la recherche des plus proches voisins ou les arbres de régression sont parmi les techniques d'apprentissage automatique les plus robustes et les plus efficaces dans le cadre d'un procédé selon l'invention.

Il est par exemple possible d'utiliser une étape d'apprentissage supervisé pour apprendre à des arbres à classer les points de valeurs anormales et de valeurs normales. Pour cela, le procédé comporte de préférence une étape préalable de réception de valeurs d'indicateurs de performance labelisées, lesdites valeurs d'indicateurs de performance labelisées ayant été de préférence générées au travers d'une méthode d'apprentissage non supervisée.

Dans un mode de réalisation préférée, un apprentissage non supervisé est utilisé pour identifier des valeurs anormales puis ces données sont utilisées pour entrainer un algorithme d'apprentissage supervisé tel qu'un algorithme de type CART (« Classification And Régression Trees » en terminologie anglosaxonne).

L'algorithme de type CART peut alors être configuré pour permettre d'attribuer un label « normal » ou « anomalie » de la valeur courante de la métrique.

Alternativement, un procédé selon l'invention peut mettre en œuvre un algorithme de type ARIMA (« autoregressive integrated moving average » en terminologie Anglosaxonne) ou tout algorithme mis en place dans le cadre de l'étape 111. En particulier, une étape de détermination 112 de valeurs de références selon l'invention peut comporter un calcul d'une prochaine valeur d'indicateur de performance dans une série de données, ledit calcul comportant l'ajout d'une variable aléatoire, puis le procédé peut comporter une étape de comparaison de la valeur d'indicateur de performance mesurée par rapport à la prochaine valeur d'indicateur de performance calculée.

Dans le cadre de l'invention un réseau de neurone de type LSTM (« Long short-term memory » en terminologie anglosaxonne) peut aussi être utilisé.

De façon préférée, la procédure de calibration 110 peut comporter une étape **de détermination 113 de corrélation inter-indicateurs de performance.** De façon plus préférée, la procédure de calibration 110 peut comporter une étape de détermination d'un lien de causalité inter-indicateurs de performance. L'identification des relations de causalité peut être réalisée par différentes techniques, par exemple par l'étude des corrélations entre métriques.

En effet, le calcul du vecteur d'anomalie augmenté se base sur l'identification d'indicateur de performance à risque d'anomalie et cette prévision est avantageusement générée à l'aide des informations historiques de l'infrastructure informatique. En particulier, un procédé selon l'invention peut se baser sur des liens inter-métriques pour caractériser que le passage en anomalie (établi ou probable) d'une ou plusieurs métriques est de nature à entrainer le passage en anomalie d'une ou plusieurs autres métriques (i.e. indicateur de performance).

De façon préférée, la détermination 113 de corrélation inter-indicateurs de performance est réalisée via des méthodes statistiques comme celle de Pearson ou celle de Spearman. En particulier, cette détermination peut reposer sur des valeurs passées (e.g. 1 à 3 mois) générées lors du fonctionnement normal et/ou lors d'un passage en anomalie d'un indicateur de performance (on étudie alors le passage en anomalie des autres métriques).

En outre, les corrélations peuvent être calculées sur des signaux synchronisés temporellement ou en prenant en compte un décalage temporel (par exemple en utilisant des méthodes de calcul de corrélations croisées).

De façon plus préférée, la détermination 113 de corrélation inter-indicateurs de performance comporte l'établissement de corrélations entre au moins trois indicateurs de performances. Par exemple, une somme des valeurs d'indicateurs de performance A et B est corrélée avec un passage en anomalie d'un indicateur de performance C.

En outre, de façon préférée, la détermination 113 de corrélation inter-indicateurs de performance comporte des corrélations entre des données transformées d'une ou de plusieurs valeurs d'indicateur de performance. En particulier, la variation (i.e. valeur de dérivée) d'une ou plusieurs métriques est corrélée avec un passage en anomalie d'un indicateur de performance.

Par exemple, la volatilité de l'indicateur de performance A est corrélée avec un passage en anomalie d'un indicateur de performance C.

De façon préférée, la procédure de calibration 110 peut comporter une étape de **détermination 114 des valeurs de références utilisées lors d'une détermination d'une valeur de risque d'incident technique.**

En effet, une fois un vecteur d'anomalie augmenté généré, celui-ci doit être étudié de façon à déterminer s'il est, ou non, indicateur d'un risque d'incident technique. Il existe de nombreuses méthodes pour déterminer une valeur de risque d'incident technique à partir d'un vecteur d'anomalie augmenté. L'étape 170 de détermination d'une valeur de risque d'incident technique qui sera décrite par la suite peut en particulier s'appuyer sur des valeurs de références utilisées lors d'identification de risque d'incident technique.

Un procédé selon l'invention peut par exemple mettre en œuvre des valeurs de seuils prédéterminés ou des motifs prédéterminés. Les valeurs de références peuvent alors être des seuils prédéterminés et par exemple renseignées par un opérateur *via* (par) une interface graphique.

Néanmoins, les valeurs de références utilisées lors de l'identification de risque de défaillance sont de préférence déterminées lors d'une étape préalable de calibrage, ladite étape préalable de calibrage étant préférablement spécifique à l'infrastructure informatique étudiée.

En particulier, dans le cadre d'un procédé selon l'invention, il peut y avoir constitution et actualisation d'une base de données d'incident technique comportant des données de vecteur d'anomalie augmenté observées lors de la survenue, ou de préférence avant la survenue, d'un incident technique.

De façon préférée, les méthodes de détermination de risque d'incident technique peuvent également s'appuyer sur les méthodes d'apprentissage supervisée ou non supervisées.

Parmi les méthodes non supervisées, l'étape de détermination 114 des valeurs de références utilisées lors d'identification de risque d'incident technique peut comporter un partitionnement non supervisé des vecteurs d'anomalie augmenté de façon à identifier les vecteurs similaires et à les regrouper par cluster (i.e. paquet, groupe). Ensuite, une part d'apprentissage supervisé peut comporter un marquage de certains clusters en vecteurs d'anomalie augmenté associés ou non à des incidents techniques.

Dans la catégorie des apprentissages supervisés il est également possible, lors de la détection d'un incident technique, d'attribuer à tous les vecteurs d'anomalie augmentés précédent l'incident une étiquette correspondant à un vecteur d'anomalie augmenté associé à un incident technique. Ainsi, si à l'avenir un motif similaire à un tel vecteur d'anomalie augmenté est généré alors il sera considéré comme étant à probabilité de conduire à un incident technique.

En outre, il peut y avoir du bruit dans la détection des anomalies et la présence d'anomalies non corrélées à l'incident. Ainsi, il est avantageux dans le cadre de l'invention de mettre en œuvre une étape de régularisation. La régularisation est une technique utilisée pour ajuster une fonction ou un modèle en ajoutant un terme de pénalité supplémentaire dans la fonction d'erreur. Cette technique de contrôle ou de réduction de la valeur des coefficients d'erreur est appelée méthode de retrait dans le cas de réseaux de neurones. Elle permet de limiter les risques associés au sur-apprentissage.

De façon préférée, l'étape de détermination 114 des valeurs de références utilisées lors d'une détermination d'une valeur de risque d'incident technique peut comporter un apprentissage supervisé comportant la mise en œuvre d'un algorithme sélectionné parmi : Méthode des k plus proches voisins, forêt d'arbres décisionnels, ou Machine à vecteurs de support.

Par exemple, une étape de détermination 114 des valeurs de références utilisées lors d'une détermination d'une valeur de risque d'incident technique peut comporter un apprentissage semi supervisé. Dans ce cas, l'étape de détermination 114 des valeurs de références peut mettre en œuvre un ou plusieurs algorithmes sélectionnés parmi : classification non supervisée, Analyse en Composantes Principales et méthode des k plus proches voisins.

De façon préférée, la procédure de calibration 110 peut comporter une étape de **détermination 115 de valeurs de références utilisées lors d'une étape de calcul de la durée estimée avant défaillance ou incident technique.** Ces valeurs sont par exemple les valeurs de durée avant passage anomalie entre indicateurs de performance.

La détermination 115 de valeurs de références utilisées lors d'une étape de calcul de la durée estimée avant défaillance ou incident technique peut par exemple comporter, sur la base de données antérieures de l'infrastructure informatique, le calcul d'une durée, par exemple médiane ou moyenne, entre le passage d'un indicateur de performance en anomalie et la survenue d'un incident technique.

Avantageusement, la détermination 115 de valeurs de références utilisées lors du calcul de la durée estimée avant défaillance ou incident technique peut par exemple comporter sur la base de données antérieures de l'infrastructure informatique, le calcul d'une durée, par exemple médiane ou moyenne, entre le passage d'un premier indicateur de performance en anomalie et le passage en anomalie d'un second indicateur de performance corrélé au premier indicateur de performance en anomalie. Ainsi, l'estimation d'une durée avant incident technique peut être plus précise et plus robuste.

Avantageusement, suite à la phase d'apprentissage, un filtre sur les indicateurs de performance collectées peut être appliqué. Ainsi, les indicateurs de performance qui ne semblent jouer aucun rôle dans la prévision d'anomalies sont exclues de l'analyse. Les indicateurs de performance qui ne semblent jouer aucun rôle dans la prévision d'anomalies sont par exemple ceux dont les valeurs ne présentent aucune corrélation avec un incident identifié et qui ne présentent pas de corrélation avec au moins un indicateur de performance présentant une corrélation directe ou indirecte avec un incident identifié. Ainsi sont avantageusement conservés notamment pour certaines étapes de calibration (valeurs seuils...), les indicateurs de performance présentant sur la base d'un jeu de données d'entrainement, une corrélation, de préférence un lien de causalité, direct(e) avec un incident ou une corrélation, de préférence un lien de causalité, indirect(e) avec un incident.

Comme cela a été évoqué, une fois l'étape 110 de calibration ou d'apprentissage mise en œuvre, un procédé de détermination selon l'invention dans sa mise en œuvre classique comporte une étape de **réception 120 de valeurs d'indicateurs de performance.** Cette étape est généralement mise en œuvre par un module de collecte 40 qui sera décrit plus avant lors de la description du dispositif selon l'invention.

Les valeurs d'indicateurs de performance sont généralement générées, au cours du temps par des sondes puis envoyées à un module de collecte centralisant ces données avant de les transférer par exemple à un module de traitement. Un module de collecte 40 de métriques (i.e. indicateur de performance) peut faire appel à une sonde 41 ou à une pluralité de sondes 41. La ou les sondes 41 permettent par exemple de collecter des données sur l'utilisation des ressources, la disponibilité des ressources, les historiques des événements, les erreurs matérielles, les erreurs logicielles, les temps de réponse, le trafic des applications, la charge de service, le trafic réseau des modifications de fichiers, le nombre d'utilisateurs d'un service, le nombre de session, le nombre de processus, des valeurs de températures, des valeurs d'hygrométrie, de fuite d'eau, de mouvement, de fumée et la consommation électrique de l'infrastructure 5 informatique. Le module 40 de collecte peut faire appel à un fichier de surveillance comportant des règles de collecte de métriques. Ces règles de collecte de métriques peuvent spécifier des données qui doivent être enregistrées lors de l'exécution de la brique applicative.

Ces mesures peuvent par exemple être réalisées à partir d'une sonde de type « Nigel's Monitor » (Nmon) ou « Performance Monitor » (Perfmon). Les sondes Nmon permettent par exemple d'afficher les données de CPU, mémoire, swap, réseau, des informations sur les utilisateurs, les groupes, les supports de stockages, sur l'utilisation du kernel, ou les processus les plus consommateurs. Les sondes de type Perfmon permettent de mesurer les performances d'une infrastructure informatique. Les informations collectées peuvent par exemple correspondre à des pourcentages d'utilisation de ressources, des temps de réponse, des temps de traitement mais également le statut des ports, le nombre de files de message JDBC ou JMS, le taux d'occupation du système de fichiers, le taux de fonctionnement du ramasse miettes ou récupérateur de mémoires (pour « garbage collector » en anglais) pour les applications J2EE (pour « Java Enterprise Edition » en anglais).

Ces sondes peuvent être associées à chaque indicateur de performance (e.g. temps de réponse, ressource ou fonctionnalités) pour remonter les informations de mesure ou métriques, représentant par exemple le fonctionnement de l'infrastructure informatique. Pour chaque indicateur de performance, la ou les sondes définissent un identifiant d'indicateur de performance et une valeur d'indicateur de performance. Les valeurs des indicateurs de performance peuvent être suivies en continu ou à des intervalles configurables de façon à obtenir des informations pour chaque indicateur de performance en fonction du temps. Ces informations peuvent être stockées dans une mémoire. Dans certains modes de réalisation, un dispositif selon l'invention comporte une interface homme-machine permettant de définir les sondes sur chaque machine qui remontent les métriques provenant de l'utilisation des ressources de la machine.

Comme cela a été évoqué, de façon préférée, lors d'une phase d'inférence, en étape 120, seuls les indicateurs de performances réellement utilisées lors de l'analyse en étape 110 seront collectées. Le filtrage peut être appliqué au niveau central, mais aussi être déporté au niveau des différentes sondes ou capteurs pour limiter la charge du module central.

En outre, les valeurs d'indicateurs de performance peuvent faire l'objet d'un **prétraitement 130 des valeurs d'indicateurs de performance** de façon à en faciliter l'exploitation ultérieure.

Un prétraitement selon l'invention peut par exemple comporter : une normalisation des données, un rééchantillonnage, une agrégation de données, et/ou un recodage des variables.

Un prétraitement 130 selon l'invention peut comporter au moins une agrégation de données. Par exemple, les valeurs obtenues sur une plage de temps prédéterminée sont agrégées. Avantageusement, un prétraitement 130 selon l'invention peut comporter des étapes différenciées de prétraitement pour chacun des indicateurs de performance.

En outre, comme cela a été présenté précédemment, les valeurs d'indicateurs de performances peuvent être soumises à une forte variation dans le temps, inhérente à l'activité ou l'exploitation normale de l'infrastructure informatique.

En particulier, le signal temporel généré par les sondes peut être découpé en trois composantes : une composante de variation globale (aussi appelée « trend » en terminologie anglosaxonne), une composante cyclique ou saisonnière et un résidu. Or, comme cela a été évoqué, c'est la valeur du résidu qui sera la plus adaptée pour identifier une valeur anormale et donc un comportement anormal de l'infrastructure informatique.

Ainsi, afin d'améliorer l'identification ultérieure de valeurs anormales, un procédé selon l'invention peut comporter une décomposition des valeurs de façon à supprimer une composante normale prédéterminée et éventuellement supprimer une composante de tendance prédéterminée. La suppression de la composante normale prédéterminée et éventuellement de la composante de tendance prédéterminée peut correspondre à une suppression multiplicative ou additive de cette ou ces composantes en fonction respectivement de la corrélation ou non du résidu à ces deux composantes. Avantageusement, un procédé selon l'invention peut comporter une suppression multiplicative et une suppression additive de cette ou ces composantes.

Ainsi, de façon préférée, l'étape d'identification 140 d'indicateurs de performance en anomalie peut être précédée par une étape de prétraitement des données collectées, c'est-à-dire des indicateurs de performance, l'étape de prétraitement des valeurs d'indicateurs de performance collectées comportant une suppression de la composante saisonnière. Alors, l'étape de prétraitement 130 des valeurs d'indicateurs de performance comporte, pour les valeurs de chacun des indicateurs de performance, une suppression de la composante normale préalablement calculée et avantageusement elle comporte également une suppression de la variation globale préalablement calculée.

Un procédé de détermination selon l'invention comporte en outre une étape **d'identification 140 d'indicateurs de performance en anomalie.** Une telle étape peut être mise en œuvre par un module 10 de traitement.

La détection d'observations atypiques ou d'anomalies est mise en œuvre dans de nombreux domaines. Dans le cadre de la présente invention, sera considérée comme étant une valeur anormale, une observation atypique qui est probablement générée par un mécanisme différent de celui de la majorité des données habituellement observées.

L'identification 140 d'indicateur de performance en anomalie peut comporter la mise en œuvre d'une méthode statistique permettant de générer des résultats binaires, des pourcentages de probabilité d'anomalie ou toute autre valeur permettant d'identifier un ou plusieurs indicateurs de performance en anomalie.

L'étape d'identification 140 d'indicateurs de performance en anomalie peut comporter la comparaison d'une valeur de chaque indicateur de performance à une valeur de référence de façon à par exemple déterminer si un seuil est dépassé. Ce type de méthodologie présente l'avantage d'être rapide à mettre en œuvre et nécessiter peu de ressources de calcul.

Ainsi, l'identification 140 d'indicateur de performance en anomalie peut comporter la comparaison des valeurs d'indicateurs de performance, prétraités ou non, à des seuils prédéterminés.

Néanmoins, la comparaison à des seuils ne permet pas une discrimination optimale des valeurs normales et des valeurs anormales. Une autre méthode de détection de valeurs anormales, ou d'anomalie, comporte l'identification d'un ou de plusieurs points de données très différents du reste des données. Il existe un très grand nombre de méthodes différentes permettant de réaliser une telle détection de valeurs anormales.

Ensuite, l'étape d'identification 140 d'indicateur de performance en anomalie peut comporter un calcul d'une distance des valeurs de résidu obtenues à la normalité. Alternativement encore, l'identification 140 d'indicateur de performance en anomalie peut comporter la mise en œuvre d'une méthode statistique permettant de générer des valeurs de distance à la normalité pour chacun des indicateurs de performance.

En particulier, il est possible de mettre en œuvre des méthodes univariées ou éventuellement des méthodes multivariées de type distance de Mahalanobis ou Analyse en Composantes Principales.

En outre, pour chacun des indicateurs de performance, l'étape d'identification 140 d'indicateur de performance en anomalie peut comporter une segmentation des valeurs passées d'un indicateur de performance et un calcul de l'appartenance de la valeur de l'indicateur de performance à un des groupes constitués, en particulier à un groupe labélisé comme « anormal ». Ainsi, il est possible de déterminer si la valeur d'indicateur de performance est, ou non, une valeur normale.

Comme cela a été détaillé, l'étape 140 d'identification d'indicateur de performance en anomalie repose, de préférence, sur la construction préalable d'un modèle d'apprentissage supervisé qui sera en mesure de classer la valeur d'indicateur de performance comme une valeur normale ou une valeur anormale.

Par exemple, lors du processus de calibration, un modèle d'apprentissage supervisé peut avoir été entrainé pour déterminer si la valeur collectée d'un indicateur de performance est une valeur normale ou une valeur anormale.

Alternativement, lors du processus de calibration, un modèle d'apprentissage supervisé de type CART peut avoir été entrainé pour déterminer une étiquette pour les valeurs d'indicateurs de performance étudiés (e.g. « normaux » ou « en anomalie »).

Une fois les valeurs anormales identifiées, l'identification des indicateurs de performance peut correspondre au respect d'un ordre dans une suite de données tel qu'un vecteur de données. Ainsi, le résultat de l'identification des valeurs anormales peut prendre la forme d'un vecteur d'anomalie v0 tel qu'illustré ci-dessous.

$$v0 = [0\ 0\ 1\ 0\ 0\ 1\ 0\ 0\ 1\ 0\ 0\ 0\ 0\ 0\ 0\ 1\ 0\ 0\ 0\ 0\ 0\ 0\ 0\ 0\ 0\ 0\ 0\ 0\ 0\ 0\ 1\ 0\ 0\ 0]$$

Un tel vecteur comporte cinq indicateurs de performance en anomalie (i.e. 1) et 30 indicateurs de performance aux valeurs normales (i.e. 0).

Une fois les valeurs anormales identifiées et donc les « indicateurs de performance en anomalie » identifiés, il est possible d'identifier des indicateurs de performance n'étant pas en anomalie mais associés (i.e. corrélés) à ces « indicateurs de performance en anomalie » dit alors « indicateurs de performance à risque ».
Ainsi, un procédé de détermination selon l'invention comporte **une étape 150 de détermination d'indicateurs à risque.**

Dans le cadre de la présente invention, la détermination d'indicateurs à risque ou la prévision d'indicateur de performance qui seront en anomalie dans un intervalle de temps prédéterminé peut être directe ou indirecte.

En particulier, dans le cadre d'une prédiction directe, l'évolution de la métrique (i.e. valeurs de d'un indicateur de performance) est telle que l'on prévoit son passage en anomalie. Par exemple avec une régression linéaire ou avec un calcul d'écart-type mettant en évidence une volatilité élevée.

En particulier, dans le cadre d'une prédiction indirecte, l'évolution de la métrique (i.e. valeurs d'un indicateur de performance) est telle que l'on utilise les liens inter-métriques pour caractériser que le passage en anomalie (établi ou probable) d'une ou plusieurs métriques est de nature à entrainer le passage en anomalie d'une ou plusieurs autres métriques.

L'étape de détermination d'indicateurs à risque peut être réalisée à partir d'une base de corrélation. Cette base de corrélation est avantageusement générée lors de la détermination 113 de corrélation inter-indicateurs de performance. Une base de corrélation selon l'invention pourra comporter des données de corrélation entre indicateurs de performance avec par exemple des liens de corrélation non causale et/ou des liens de corrélation causale. Les liens de causalité peuvent être étiquetés de façon différenciée en fonction de la présence ou non d'une causalité. En outre, la base de corrélation pourra comporter des valeurs de durée avant passage en anomalie entre indicateurs de performance corrélés ou encore des indices de corrélation.

En référence au vecteur d'anomalie v0 illustré ci-dessus, l'étape 150 s'intéresse à déterminer les indicateurs de performances ayant été corrélés aux cinq indicateurs de performances identifié comme en anomalie lors de l'étape 140.

Cette étape de détermination 150 comporte en particulier une identification d'indicateurs de performance de l'infrastructure informatique corrélés aux indicateurs en anomalie préalablement identifiés. Ces indicateurs de performance identifiés lors de l'étape 150 peuvent être appelés d'indicateurs de performance à risque.

Les indicateurs de performance de l'infrastructure informatique corrélés aux indicateurs en anomalie préalablement identifiés peuvent être identifiés par une ou plusieurs bases (ou tables ou matrices) de corrélation 21 préalablement établies comme cela a été décrit précédemment. De telles bases 21 de corrélation comportent des liens entre un indicateur de performance et un ou plusieurs autres indicateurs de performance. En effet, certaines anomalies sur une ou des métriques peuvent être causées par d'autres anomalies survenant sur d'autres métriques, entrainant ainsi un effet de cascade.

En particulier, l'identification d'indicateurs de performance de l'infrastructure informatique corrélés aux indicateurs en anomalie identifiés peut avantageusement être réalisée sur la base d'une base (ou table ou matrice) de corrélation 21 mémorisant les corrélations inter-indicateurs de performance.

A noter que la corrélation sera associée ou non à un lien de causalité. Ainsi, bien que le procédé puisse se baser sur des liens de corrélation n'étant pas obligatoirement causale, l'identification d'indicateurs de performance de l'infrastructure informatique corrélés aux indicateurs en anomalie peut avantageusement être réalisée sur la base d'une base de causalité mémorisant les liens de causalité inter-indicateurs de performance. L'identification des relations de causalité peut être réalisée par différentes techniques d'inférence causale.

Comme cela a été présenté, l'étape de détermination 150 d'indicateurs à risque peut comporter l'identification d'indicateurs de performance de l'infrastructure informatique corrélés aux indicateurs en anomalie. Ces indicateurs de performance identifiés peuvent être appelés indicateurs de performance à risque de premier niveau. En effet, les indicateurs de performance à risque de premier niveau ont été obtenus par la recherche d'indicateurs de performance corrélés aux indicateurs de performance en anomalie. En outre, une telle étape de détermination 150 peut se limiter à cette première identification.

Néanmoins, de façon préférée, elle comporte en outre une identification d'indicateurs de performance de l'infrastructure informatique corrélés aux indicateurs de performance à risque de premier niveau. Ces indicateurs de performance peuvent être appelés indicateurs de performance à risque de deuxième niveau. L'étape de détermination 150 d'indicateurs à risque peut se limiter à ces deux étapes.

Néanmoins, de façon préférée, elle comporte en outre une identification d'indicateurs de performance de l'infrastructure informatique corrélés aux indicateurs de performance à risque de second niveau. Ces indicateurs de performance peuvent être appelés indicateurs de performance à risque de troisième niveau.

Ainsi, l'identification d'indicateurs de performance de l'infrastructure informatique corrélés aux indicateurs de performance à risque peut se poursuivre par exemple jusqu'à qu'il n'y ait plus de nouveaux indicateurs de performance de l'infrastructure informatique corrélés aux indicateurs de performance à risque.

Une fois des indicateurs de performance à risque identifiés, un procédé selon l'invention comporte une **étape de création 160 d'un vecteur d'anomalies augmenté.** Une telle étape correspond généralement au résultat de l'étape 150 de détermination d'indicateurs à risque. Néanmoins, lorsque l'étape 150 de détermination d'indicateurs à risque se fait indépendamment par sous-système de l'infrastructure informatique alors cette étape peut comporter une concaténation de données pour former un vecteur d'anomalie augmenté.

Le vecteur d'anomalie augmenté comporte en particulier des valeurs associées aux indicateurs de performance en anomalie et des valeurs associées aux indicateurs de performance à risque. De façon particulière, le vecteur d'anomalie augmenté comporte des valeurs permettant de différencier au moins trois catégories d'indicateurs de performance à savoir par exemple : les indicateurs de performance n'étant pas en anomalie, les indicateurs de performance en anomalie et les indicateurs de performance à risque.

$$v1 = [0\ 0\ 1\ 0\ 0\ 1\ 2\ 0\ 1\ 0\ 2\ 0\ 0\ 0\ 0\ 1\ 2\ 0\ 0\ 0\ 0\ 3\ 0\ 0\ 0\ 2\ 0\ 0\ 2\ 0\ 0\ 1\ 0\ 0\ 0]$$

Par exemple, le vecteur v1 ci-dessus comporte des valeurs associées aux indicateurs de performance en anomalie (i.e. 1), des valeurs associées aux indicateurs de performance à risque de premier niveau (i.e. 2), et des valeurs associées aux indicateurs de performance à risque de deuxième niveau (i.e. 3). En outre, il comporte des valeurs associées aux indicateurs de performance n'appartenant pas à ces catégories (i.e. 0).

De préférence, le vecteur d'anomalie augmenté comporte en outre des indicateurs à risque de second niveau, lesdits indicateurs à risque de second niveau étant des indicateurs de performance de l'infrastructure informatique corrélés aux indicateurs à risques.

En outre, de façon préférée, dans le vecteur d'anomalie augmenté, la valeur associée aux indicateurs de performance à risque peut correspondre à une probabilité de devenir un indicateur en anomalie dans un intervalle de temps prédéterminé.

$$v2 = [0\ 0\ 1\ 0\ 0\ 1\ 30\%\ 0\ 1\ 0\ 40\%\ 0\ 0\ 0\ 1\ 35\%\ 0\ 0\ 0\ 0\ 10\%\ 0\ 0\ 0\ 32\%\ 0\ 0\ 45\%\ 0\ 0\ 1\ 0\ 0\ 0]$$

Par exemple, le vecteur v2 ci-dessus comporte des valeurs associées aux indicateurs de performance en anomalie (i.e. 1) et des pourcentages de risque de tomber en anomalie dans les prochaines deux heures pour les indicateurs de performance à risque (i.e. 30%, 40%, 35%). En outre, il comporte des valeurs associées aux indicateurs de performance n'appartenant pas à ces catégorie (i.e. 0).

De façon plus préférée, dans le vecteur d'anomalie augmenté, les valeurs associées aux indicateurs de performance en anomalie ou à risque peuvent correspondre à une durée estimée avant passage en anomalie de l'indicateur de performance. La durée estimée avant incident technique correspond par exemple à une durée moyenne ou médiane observée par le passé entre le moment où un indicateur de performance a présenté une valeur anormale et un incident technique sur l'infrastructure informatique.

$$v3 = [+ + 0 + + 0\ 85 + 0 + 89 + + + + 0\ 200 + + + + 110 + + + 75 + + 215 + + 0 + + +]$$

Par exemple, le vecteur v3 ci-dessus comporte des valeurs de durée avant incident technique associées aux indicateurs de performance en anomalie et à risque (i.e. 200 minutes ; 110 minutes ; 85 minutes). Les indicateurs de performance « normaux » et sans passage en anomalie prévisible sont représentés par un « + » tandis que les indicateurs de performance « en anomalie » sont représentés par un « 0 ».

Ainsi, outre une notion de risque d'incident technique, un procédé selon l'invention peut permettre de générer une durée estimée avant un incident technique probable.

En outre, le vecteur d'anomalie augmenté peut comporter une mais aussi plusieurs séries de valeurs. Dans ce cas il peut aussi être qualifié de matrice. Un vecteur d'anomalie augmenté comportant plusieurs séries de données peut permettre de générer une information plus précise sur les risques d'incident technique pesant sur l'infrastructure informatique.

Le vecteur d'anomalie augmenté est une structure de données qui exprime pour chaque métrique si elle est en anomalie ou si elle pourrait passer en anomalie, au vu de l'état courant observé de l'infrastructure informatique. De préférence, pour chaque scénario, le vecteur d'anomalie comporte une valeur de degré de confiance de passage en anomalie pour chacune des métriques (i.e. indicateur de performance). Ainsi, la valeur de risque d'incident technique déterminée dans le cadre du procédé pourra prendre en compte une valeur de degré de confiance calculée dans le cadre du procédé. Une valeur de degré de confiance peut par exemple être calculée sur la base de données antérieures des valeurs de coefficients de corrélation entre les indicateurs de performance.

v4 =

[Tableaux 1]

| 0 | 0 | 1 | 0 | 0 | 1 | 2 | 0 | 1 | 0 | 2 | 0 | 0 | 0 | 0 | 1 | 2 | 0 | 0 |
|---|---|---|---|---|---|---|---|---|---|---|---|---|---|---|---|---|---|---|
| | | 100% | | | 100% | 80% | | 100% | | 70% | | | | | 100% | 40% | | |

Par exemple, le vecteur v4 ci-dessus comporte des valeurs associées aux indicateurs de performance en anomalie (i.e. 1), des valeurs associées aux indicateurs de performance à risque de premier niveau (i.e. 2), et des valeurs associées aux indicateurs de performance n'appartenant pas à ces catégorie (i.e. 0). En outre, il comporte des valeurs de scores de confiance associés sous forme de pourcentage aux indicateurs de performance à risque de premier niveau.

Ainsi, la valeur de risque d'incident technique déterminée dans le cadre du procédé, pourra prendre en compte une valeur de degré de confiance calculée dans le cadre du procédé.

De préférence, le vecteur d'anomalie augmenté comporte en outre, pour chacun des indicateurs à risque, une valeur de durée estimée avant passage en anomalie de l'indicateur de performance. Le vecteur d'anomalie augmenté peut aussi comporter en outre, pour chacun des indicateurs en anomalie et/ou à risque, une valeur de durée estimée avant un incident technique.

Par exemple, le vecteur v5 ci-dessous, outre des valeurs de durée avant incident technique associées aux indicateurs de performance en anomalie et à risque, comporte des valeurs de scores de confiance associées sous forme de pourcentage aux durées estimées pour chacun des indicateurs de performance en anomalie ou à risque.

v5 =

[Tableaux 2]

| 0 | 0 | 200 | 0 | 0 | 190 | 85 | 0 | 180 | 0 | 95 | 0 | 0 | 0 | 0 | 200 | 75 | 0 | 0 |
|---|---|-----|---|---|-----|-----|---|-----|---|-----|---|---|---|---|-----|-----|---|---|
|   |   | 80% |   |   | 80% | 60% |   | 90% |   | 50% |   |   |   |   | 80% | 55% |   |   |

Avantageusement, un vecteur d'anomalie augmenté comporte des données au moins sur la valeur de durée estimée avant passage en anomalie et un score de confiance (e.g. calculé à partir de valeurs de degré de confiance).

Le vecteur d'anomalie augmenté peut comporter de nombreuses autres séries de données. Par exemple, le vecteur v6 ci-dessous comporte, outre des valeurs de durée avant incident technique et des valeurs de scores de confiance, un identifiant (e.g. identifiants A à S présentés dans le tableau ci-dessous) pour chacun des indicateurs de performance.

v6 =

[Tableaux 3]

| A | B | C | D | E | F | G | H | I | J | K | L | M | N | O | P | Q | R | S |
|---|---|---|---|---|---|---|---|---|---|---|---|---|---|---|---|---|---|---|
| 0 | 0 | 200 | 0 | 0 | 190 | 85 | 0 | 180 | 0 | 95 | 0 | 0 | 0 | 0 | 200 | 75 | 0 | 0 |
|   |   | 80% |   |   | 80% | 60% |   | 90% |   | 50% |   |   |   |   | 80% | 55% |   |   |

Le vecteur d'anomalie augmenté peut comporter des données sur les indicateurs de performance n'étant pas en anomalie ou risque d'anomalie. Alternativement, comme présenté avec le vecteur v7 ci-dessous, il peut ne comporter des données que pour les indicateurs de performance en anomalie ou à risque.

v7 =

[Tableaux 4]

| C | F | G | I | K | P | Q |
|---|---|---|---|---|---|---|
| 200 | 190 | 85 | 180 | 95 | 200 | 75 |
| 80% | 80% | 60% | 90% | 50% | 80% | 55% |

De façon préférée, une valeur associée aux indicateurs de performance est sélectionnée parmi : un statut actuel de l'indicateurs de performance (en anomalie, à risque, normal), une date de passage en anomalie prévue, une durée prévue avant passage en anomalie, un indice de confiance (i.e. valeur de degré de confiance) dans la prévision de passage en anomalie et/ou un indice de confiance dans la date de changement d'état prévue.

De façon plus préférée, une valeur associée aux indicateurs de performance est sélectionnée parmi : un statut actuel de l'indicateurs de performance (en anomalie, à risque, normal), une date de passage en anomalie prévue, et/ou une durée prévue avant passage en anomalie.

De façon encore plus préférée, une valeur associée aux indicateurs de performance correspond à une date de passage en anomalie prévue.

Suite à la création du vecteur d'anomalie augmenté, un procédé selon l'invention comporte une étape de **détermination 170 d'une valeur de risque d'incident technique.** Une telle étape peut être mise en œuvre par un module 10 de traitement.

La détermination 170 d'une valeur de risque d'incident technique correspond à une étape de réalisation d'une prévision d'incident technique sur l'infrastructure informatique ou encore le calcul d'un risque d'incident technique. En effet, grâce au vecteur d'anomalie augmenté il est généré un vecteur reflétant un comportement probable de l'infrastructure informatique dans les heures à venir au regard de premiers indicateurs de performance à risque.

La détermination 170 d'une valeur de risque d'incident technique peut être réalisée par de nombreuses méthodes.

Généralement, la détermination 170 d'une valeur de risque d'incident technique s'appuiera sur une comparaison du vecteur d'anomalie augmenté à des valeurs de référence déterminées par exemple lors de l'étape 114.

Il est par exemple possible de comparer le nombre d'indicateur de performance en anomalie et d'indicateur de performance à risque à des seuils prédéterminés de façon à déterminer une valeur de risque.

En outre, il peut être mis en œuvre des méthodes basées sur des méthodes statistiques permettant d'obtenir des résultats plus sensibles et plus spécifiques.

Il peut par exemple être mis en œuvre une étape de mesure de distance entre le vecteur d'anomalie augmenté et des vecteurs de référence. Ces vecteurs de référence pourront par exemple comporter des vecteurs générés lors de conditions de fonctionnement normale de l'infrastructure informatique et des vecteurs d'anomalie générés avant et/ou pendant la survenue d'un incident technique sur l'infrastructure informatique.

De façon préférée, il peut par exemple être mis en œuvre une étape de calcul de la similarité entre le vecteur d'anomalie augmenté et des vecteurs de référence, tels que des vecteurs de référence d'incident. Les vecteurs de référence d'incidents sont des vecteurs observés pendant ou avant un incident technique sur l'infrastructure informatique. La similarité peut alors être définie comme le pourcentage d'indicateurs de performances identiques entre deux vecteurs. Ainsi, lors de l'inférence, un seuil de similarité permet de dire si un vecteur peut être considéré comme un vecteur de référence d'incident.

De façon préférée, il peut par exemple être mis en œuvre une étape de classification du vecteur d'anomalie augmenté au sein d'un modèle de classification de vecteur comportant des groupes de vecteur associé à un fonctionnement normal et des groupes de vecteurs associés à un incident technique. Pendant l'apprentissage, deux types de vecteurs sont appris : les vecteurs de référence d'incidents et les vecteurs de référence normaux.

En particulier, dans le cadre de l'étape de détermination 170 d'une valeur de risque d'incident technique, il peut y avoir une comparaison et le calcul d'une distance entre le vecteur d'anomalie augmenté et différents groupes prédéterminés associés à des défaillances. Par exemple, si la distance est élevée, c'est-à-dire par exemple supérieure à un seuil prédéterminé, alors une valeur de risque d'incident est générée indiquant une absence de risque, si la distance est proche(e.g. inférieure à un seuil prédéterminé) alors une valeur de risque d'incident est générée indiquant une prévision d'incident, et enfin, si la distance est moyenne (e.g. comprise entre deux seuils prédéterminés) alors la valeur de risque d'incident peut correspondre à une mise en surveillance. De façon préférée, le vecteur d'anomalie augmentée est comparé à des groupes de vecteurs d'incident technique et à des groupes de vecteurs normaux de façon à générer des valeurs de distance. Ensuite, les valeurs de distance entre le vecteur d'anomalie augmenté et chacun des deux groupes est comparée de façon à déterminer s'il y a ou non absence de risques.

En particulier, un premier regroupement peut être réalisé à l'aide d'un algorithme de type K-Means puis chaque vecteur d'anomalie augmenté est comparé aux vecteurs de référence normal et d'incident avec la méthode des k plus proches voisins.

En outre, les méthodes décrites ci-avant, déjà performantes, peuvent être améliorées avec la prise en compte de la date à laquelle les vecteurs ont été générés. Par exemple, une classification peut prendre en compte à la fois les composants du vecteur mais aussi le moment de son apparition. L'hypothèse est que les vecteurs proches les uns des autres (en temps) ont plus de chances d'appartenir au même groupe que les vecteurs éloignés. Cela s'applique en particulier lors de l'apprentissage et la classification des vecteurs de référence.

Comme détaillé par la suite, une fois la valeur de risque d'incident technique calculée, un procédé selon l'invention peut comporter une étape de transmission et/ou d'affichage 190 de ladite valeur de risque d'incident technique.

En outre, une fois des indicateurs de performance à risque identifiés, un procédé selon l'invention peut comporter **une étape de détermination 180 d'une durée estimée avant un incident technique.** Une telle étape peut être mise en œuvre par un module de traitement de données 10. En outre, une telle étape peut se baser sur des valeurs de référence telle que des durées (e.g. médiane ou moyenne), entre le passage d'un premier indicateur de performance en anomalie et le passage en anomalie d'un second indicateur de performance corrélé au premier indicateur de performance en anomalie. De telles données peuvent être mémorisées sur un module de stockage 20 et/ou une base de corrélation 21.

En particulier, l'étape de détermination d'une durée estimée avant un incident technique peut comporter un calcul, à partir des indicateurs en anomalie et des indicateurs à risque identifiés, d'un plus court chemin entrainant un risque d'incident technique. Le plus court chemin pouvant correspondre à un chemin menant à une défaillance dont la somme des durées avant passage en anomalie entre indicateurs de performance corrélés est la plus courte.

En particulier, l'étape de détermination d'une durée estimée avant un incident technique peut comporter un calcul d'une durée estimée à partir des valeurs de durée avant passage en anomalie entre indicateurs de performance corrélés. Cela peut être fait pour chacun des indicateurs de performance constituant un chemin pouvant conduire à une défaillance de l'infrastructure 5 informatique.

Ainsi, le procédé peut comporter : une identification des chemins pouvant conduire à une défaillance, le calcul de la durée avant défaillance pour chacun de ces chemins et l'identification du chemin le plus court (i.e. le plus rapide) entrainant un risque d'incident technique. En outre, le calcul d'un plus court chemin entrainant un risque d'incident technique et le calcul d'une durée estimée avant un incident technique peuvent se faire concomitamment ou successivement.

Le plus court chemin peut également être pondéré avec des valeurs de degrés de confiance calculées pour chaque indicateur de performance à risque de passer en anomalie.

Avantageusement, l'étape de détermination d'une durée estimée avant un incident technique pourra comporter la mise en œuvre d'un algorithme basé sur la théorie des graphes.

En outre, un procédé selon l'invention peut utiliser l'identification d'une même prévision réalisée à des intervalles de temps successifs pour modifier une valeur de degré de confiance et renforcer la confiance dans la prévision.

En outre, une fois des indicateurs de performance à risque identifiés, un procédé selon l'invention peut comporter une **étape de détermination 185 d'une valeur d'indice de performance de la prédiction d'anomalie.** Une telle étape peut être mise en œuvre par un module 10 de traitement de données.

Une valeur d'indice de performance de la prédiction d'anomalie selon l'invention peut par exemple prendre la forme d'un pourcentage d'indicateurs de performance à risque d'anomalie confirmés. C'est-à-dire un pourcentage d'indicateurs de performance ayant été identifiés comme à risque d'anomalie (e.g. lors d'une étape de détermination 150 d'indicateurs à risque) et identifiés comme nouveaux indicateurs en anomalie confirmés entre le moment où ils ont été identifiés comme à risque et par exemple un instant où une information d'incident évité ou d'incident résolu a été réceptionnée par le dispositif 1 informatique. Elle peut aussi correspondre à la formule suivante :

$$\text{IPerf} = |\text{IP à risque} \cap \text{IP confirmés}| \, / \, |\text{IP à risque} \cup \text{IP confirmés}|$$

Avec :

IPerf : la valeur de l'indice de performance

IP à risque : les indicateurs de performance ayant été identifiés comme à risque d'anomalie

IP confirmés : les nouveaux indicateurs en anomalie confirmés

Par exemple, dans le cadre du procédé selon l'invention, il peut être identifié des indicateurs de performance en anomalie ainsi que des indicateurs à risque, c'est-à-dire des indicateurs de performance n'étant pas en anomalie à un instant donné mais étant corrélés à ces indicateurs de performance en anomalie. Lors d'une étape de détermination 185 d'une valeur d'indice de performance de la prédiction d'anomalie il pourra être déterminé des nouveaux indicateurs en anomalie confirmés (Réels) qui pourront être comparés aux indicateurs à risque (Prédits).

[Tableaux 5]

|  | Prédits | Réels - Cas 1 | Réels - Cas 2 |
|---|---|---|---|
| Premiers indicateurs à risque / Nouveaux indicateurs en anomalie confirmés | B1, B2, B3, B4, B5, B6 | B1, B2, B3, B4, B5, B6 | B1, B2, B3, B4, B5 |
| Deuxièmes indicateurs à risque / Nouveaux indicateurs en anomalie confirmés | C1, C2, C3, C4, C5, C6, C7, C8, C9 | C1, C2, C3, C4, C5, C6, C7, C8, C10 | C1, C2, C3, C4, C5, C6, C11 |
| Troisièmes indicateurs à risque / Nouveaux indicateurs en anomalie confirmés | D1, D2, D3, D4, D5, D6 | D1, D2, D3, D4, D5, D6 | D1, D2, D3, D4, D5, D7 |
| Indice de performance | na | 90,9 % | 66,6 % |

Dans le tableau 5 ci-dessus, deux cas ont été illustrés. Dans le premier cas (Cas 1), les nouveaux indicateurs en anomalie confirmés sont presque identiques aux indicateurs prédits ainsi, l'indice de performance est élevé (90,9%). Au contraire, dans le second cas (Cas 2), il y a de nombreuses différences avec des indicateurs en anomalie non prédits tels que C11 et D7 ainsi que des indicateurs en anomalie prédits mais non réalisés tels que B6, C7, C8, C9 et D6. Il en résulte un indice de performance faible (66,6%).

De plus, le procédé selon l'invention peut comporter une étape de génération de valeurs de durée avant passage en anomalie actualisées. En particulier, un procédé selon l'invention peut alors comporter une comparaison entre des valeurs enregistrées de durée avant passage en anomalie et des valeurs de durée avant passage en anomalie actualisées. Une telle comparaison peut être utilisée pour déterminer la valeur d'indice de performance. Dans ce cas, la valeur d'indice de performance sera réduite considérant les différences observées entre valeurs de durée avant passage en anomalie.

En outre, le procédé peut aussi comporter alors une **étape de modification des valeurs de durées avant passage en anomalie** mémorisées dans la base de corrélation 21 en fonction des valeurs de durée avant passage en anomalie actualisées. Cette modification peut se faire de différentes façons par exemple en utilisant la valeur actualisée dans le calcul d'une moyenne, d'une médiane ou encore plus largement dans le calcul d'une nouvelle valeur qui sera fonction de l'ancienne valeur et de la valeur actualisée.

Une fois la valeur de risque d'incident technique calculée, un procédé selon l'invention peut comporter une **étape 190** de transmission et/ou d'affichage d'une valeur de risque d'incident technique. L'étape 190 peut également comporter une transmission d'une valeur d'indice de performance de prédiction d'anomalies et/ou d'une valeur de durée estimée avant incident technique.

En outre, un procédé 100 selon l'invention peut permettre la génération de tableau de bord comportant par exemple :

Le nombre d'anomalies (identifiées ou prédites) moyen,
La répartition des anomalies (identifiées ou prédites) par ilot fonctionnel,
L'évolution du nombre d'anomalies (identifiées ou prédites), par exemple par ilot fonctionnel,
L'enchainement d'anomalies ayant engendrée l'incident technique,
Le temps estimé avant l'incident technique et/ou
Le pourcentage de confiance en la prédiction.

En outre, l'étape de transmission et/ou d'affichage 190 de ladite valeur de risque d'incident technique peut être précédée par une étape d'agrégation des prévisions. En effet, si une détermination d'une valeur de risque d'incident technique est réalisée toutes les 5 minutes, et qu'à la date T0 un incident est prévu pour se produire à la date T1=T0+1h, un procédé selon l'invention est avantageusement configuré pour de pas afficher à l'utilisateur un nouvel incident prévu aux dates TO+5, TO+10... TO+55, mais déterminer que l'incident est le même que celui prévu à T0 pour ne pas submerger l'opérateur d'alertes.

En outre, un procédé selon l'invention peut utiliser l'identification d'une même prévision réalisée à des intervalles de temps successifs pour modifier une valeur de degré de confiance et renforcer la confiance dans la prévision.

De façon préférée, un procédé selon l'invention comporte la génération de tableau de bord comportant le temps estimé avant l'incident ou l'heure estimée de l'incident technique et le pourcentage de confiance en la prédiction.

Ainsi, les inventeurs ont développé une méthodologie permettant d'améliorer la détection de valeurs anormales au sein d'une multitude de métriques suivies en continu et analysées en temps réel. Cette invention repose notamment sur des analyses prédictives permettant de déterminer à partir de signaux faibles, le moment et la probabilité de survenue d'un incident technique à venir.

A partir des valeurs anormales correctement identifiées, il est possible d'évaluer le risque d'un incident par des comparaisons / corrélations avec des incidents survenus auparavant ou si possible par l'utilisation d'un modèle prédictif d'incident entrainé sur des données historiques.

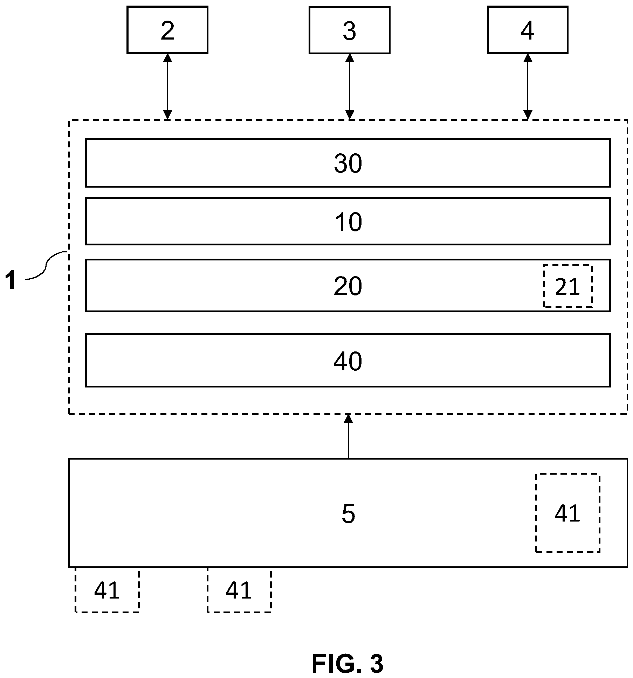

Selon **un autre aspect,** l'invention porte sur un **dispositif** 1 informatique de détermination d'une valeur de risque d'incident technique dans une infrastructure 5 informatique. Un dispositif 1 ou dispositif 1 informatique selon l'invention est illustré à la **figure 3.**

Le dispositif 1 est en particulier configuré pour déterminer une valeur de risque d'incident technique dans une infrastructure 5 informatique à partir de données collectées (i.e. valeur d'indicateurs de performance) par des sondes dédiées à la surveillance d'indicateurs de performance de l'infrastructure 5 informatique.

Le dispositif 1 informatique peut comporter un **module de stockage 20.** Comme décrit par la suite, ce module de stockage est configuré pour mémoriser toutes les données et valeurs générées lors des étapes 110 de calibration / apprentissage. En outre, il peut être configuré pour mémoriser des vecteurs augmentés générés au cours du temps ou des durées estimées. En particulier, il est configuré pour mémoriser au moins une base 21 de corrélation entre indicateurs de performance, ladite base 21 de corrélation comportant des valeurs de durée avant passage anomalie entre indicateurs de performance.

Les valeurs de durée avant passage anomalie entre indicateurs de performance peuvent correspondre en particulier à des durées observées (e.g. moyenne, médiane...) entre le passage en anomalie d'un premier indicateur de performance et le passage en anomalie d'un deuxième indicateur de performance étant corrélé à un premier indicateur de performance.

Le module de stockage 20 est de préférence configuré pour mémoriser : un ou plusieurs profils de normalité en fonction du temps, des valeurs de références pouvant être utilisées lors de l'identification de valeurs anormales, une base de corrélation 21 (e.g. table), une base de causalité, des valeurs de références utilisées lors d'identification d'un risque d'incident technique, et/ou des valeurs de références utilisées lors d'une étape de calcul de la durée estimée avant défaillance.

Pour cela, le module de stockage 20 peut comprendre n'importe quel support lisible par ordinateur connu dans l'art comprenant, par exemple, une mémoire volatile, telle qu'une mémoire vive statique (SRAM) et une mémoire vive dynamique (DRAM), et / ou une mémoire non volatile, telle que mémoire morte, mémoires flash, disques durs, disques optiques et bandes magnétiques. Le module 20 de stockage peut comprendre une pluralité d'instructions ou de modules ou d'applications pour effectuer diverses fonctionnalités. Ainsi, le module 20 de stockage peut mettre en œuvre des routines, des programmes, ou des structures de données de type matricielle. De façon préférée, le module 20 de stockage peut comprendre un support lisible par un système informatique sous la forme d'une mémoire volatile, telle qu'une mémoire vive (RAM) et / ou une mémoire cache. Le module 20 de stockage, comme les autres modules, peut par exemple être connecté avec les autres composants du dispositif 1 via un bus de communication et une ou plusieurs interfaces de support de données.

En outre, le dispositif 1 informatique peut aussi comporter un **module de communication 30.** Un module de communication 30 selon l'invention est en particulier configuré pour échanger des données avec des dispositifs tiers. Le dispositif 1 communique avec d'autres dispositifs ou systèmes informatiques et notamment des clients 2, 3, 4 grâce à ce module de communication 30. Le module de communication permet en outre, de transmettre les données sur au moins un réseau de communication et peut comprendre une communication filaire ou sans fil. De préférence, la communication est opérée par l'intermédiaire d'un protocole sans fil tel que wifi, 3G, 4G, et/ou Bluetooth. Ces échanges de données peuvent prendre la forme d'envoi et de réception de fichiers. Par exemple, le module de communication 30 peut être configuré pour transmettre un fichier imprimable. Le module de communication 30 peut être en particulier configuré pour permettre la communication avec un terminal distant, dont un client 2,3,4. Le client est généralement, tout matériel et/ou logiciel apte à communiquer avec le dispositif. Le module de communication 30 peut également être configuré pour communiquer via une interface homme-machine.

En outre, le dispositif 1 informatique peut aussi comporter un **module de collecte 40 de métriques.** Un module de collecte 40 de métriques selon l'invention est en particulier configuré pour mesurer l'utilisation des ressources, la disponibilité des ressources, les historiques des événements, les erreurs matérielles, les erreurs logicielles, les temps de réponse, le trafic des applications, la charge de service, le trafic réseau des modifications de fichiers, le nombre d'utilisateurs d'un service, le nombre de session, le nombre de processus, des valeurs de températures, des valeurs d'hygrométrie, de fuite d'eau, de mouvement, de fumée et/ou la consommation électrique. Pour cela, le module 40 de collecte de métriques peut faire appel à une sonde 41 ou à une pluralité de sondes 41 déjà décrites.

Le dispositif 1 informatique comprend notamment **un module de traitement 10 de données.** Le dispositif 1 informatique, plus particulièrement le module de traitement 10, est avantageusement configuré pour exécuter un procédé selon l'invention. Ainsi, le module de traitement 10 peut correspondre à tout agencement matériel et logiciel apte à permettre l'exécution d'instructions.

En particulier, le module de traitement 10 de données est configuré pour exécuter les étapes suivantes :

- une étape d'identification d'indicateurs de performance en anomalie ladite identification comportant une analyse des valeurs d'indicateurs de performances (i.e. données collectées) de façon à identifier des valeurs anormales et une identification d'indicateurs de performance associés à ces valeurs anormales,
- une étape de détermination d'indicateurs à risque, ladite détermination comportant une identification d'indicateurs de performance de l'infrastructure 5 informatique corrélés aux indicateurs en anomalie identifiés,
- une étape de création d'un vecteur d'anomalies augmenté, ledit vecteur d'anomalies augmenté comportant des données relatives aux indicateurs en anomalie identifiés et des données relatives aux identifiants des indicateurs à risque déterminés,
- une étape de comparaison du vecteur d'anomalies augmenté à des données de références prédéterminées, et
- une étape de détermination d'une valeur de risque d'incident technique à l'issue de la comparaison.

En outre, le module 10 de traitement est avantageusement configuré pour exécuter les différents modes de réalisation d'un procédé selon l'invention.

Les différents modules ou référentiels sont distincts sur la figure 3 mais l'invention peut prévoir divers types d'agencement comme par exemple un seul module cumulant l'ensemble des fonctions décrites ici. De même, ces moyens peuvent être divisés en plusieurs cartes électroniques ou bien rassemblés sur une seule carte électronique.

Un dispositif 1 selon l'invention peut être intégré dans un système informatique et ainsi être apte à communiquer avec un ou plusieurs dispositifs externes tels qu'un clavier, un dispositif de pointage, un affichage, ou tout dispositif permettant à un utilisateur d'interagir avec le dispositif 1. Il faut comprendre que bien que non représenté, d'autres composants matériels et / ou logiciels pourraient être utilisé en conjonction avec un dispositif 1. Ainsi, dans un mode de réalisation de la présente invention, le dispositif 1 peut être couplé à une interface homme machine (IHM). L'IHM, comme déjà abordé, peut être utilisée pour permettre la transmission de paramètres aux dispositifs ou à l'inverse mettre à disposition de l'utilisateur les valeurs des données mesurées ou calculées par le dispositif. De façon générale, l'IHM est couplée de manière communicative avec un processeur et elle comprend une interface de sortie utilisateur et une interface d'entrée utilisateur. L'interface de sortie utilisateur peut comprendre une interface d'affichage et de sortie audio et divers indicateurs tels que des indicateurs visuels, des indicateurs audibles et des indicateurs haptiques. L'interface d'entrée utilisateur peut comprendre un clavier, une souris ou un autre module de navigation curseur tel qu'un écran tactile, un pavé tactile, une interface d'entrée de stylet et un microphone pour l'entrée de signaux audibles tels qu'un discours d'utilisateur, des données et des commandes qui peuvent être reconnues par le processeur.

Dans un mode de réalisation de la présente invention, le dispositif 1 peut être couplé à une interface de communication, par exemple une interface réseau de type Ethernet, FiberChannel, InfiniBand ou n'importe quels dispositifs permettant au dispositif 1 de communiquer avec un ou plusieurs autres dispositifs informatiques.

L'invention, selon **un autre aspect,** porte sur un **programme d'ordinateur,** ou produit programme d'ordinateur, comprenant des instructions pour mettre en œuvre un procédé selon l'invention. Un tel programme d'ordinateur peut notamment être subdivisé en plusieurs sous-programmes tels qu'un programme frontal et plusieurs logiciels arrière-plan.

Ainsi, comme cela sera apprécié par l'homme de l'art, des aspects de la présente invention peuvent être réalisés en tant que dispositif, système, procédé ou produit de programme d'ordinateur. En conséquence, des aspects de la présente invention peuvent prendre la forme d'un mode de réalisation entièrement matériel, d'un mode de réalisation entièrement logiciel (comprenant un micrologiciel, un logiciel résident, un microcode, etc.) ou d'un mode de réalisation particulier tel que comme un "circuit", "module" ou "système". En outre, des aspects de la présente invention peuvent prendre la forme d'un produit de programme d'ordinateur incorporé dans un ou plusieurs supports lisibles par ordinateur ayant un code de programme lisible par ordinateur incorporé sur celui-ci.

Toute combinaison d'un ou plusieurs supports lisibles par ordinateur peut être utilisée. Dans le contexte de ce document, un support lisible par ordinateur peut être n'importe quel support tangible qui peut contenir, ou stocker un programme à utiliser par ou en relation avec un système d'exécution d'instructions, appareil ou dispositif. Un support lisible par ordinateur peut être, par exemple, mais sans s'y limiter, un système, appareil ou dispositif électronique, magnétique, optique, électromagnétique, infrarouge ou semi-conducteur, ou toute combinaison appropriée de ce qui précède. Des exemples plus spécifiques (une liste non exhaustive) du support de stockage lisible par ordinateur comprendraient : un disque dur, une mémoire vive (RAM).

Un code de programme informatique pour effectuer des opérations pour des aspects de la présente invention peut être écrit dans n'importe quelle combinaison d'un ou plusieurs langages de programmation, y compris un langage de programmation orienté objet tel que Java, C ++ ou similaire, le langage de programmation "C" ou des langages de programmation similaires, un langage de script tel que Perl, ou des langages similaires, et/ou des langages fonctionnels tels que Meta Langage. Le code de programme peut s'exécuter entièrement sur l'ordinateur d'un utilisateur, en partie sur l'ordinateur d'un utilisateur et en partie sur un ordinateur distant ou entièrement sur l'ordinateur ou le serveur distant. Dans ce dernier scénario, l'ordinateur distant peut être connecté à l'ordinateur d'un utilisateur par tout type de réseau, y compris un réseau local (LAN) ou un réseau étendu (WAN).

Ces instructions de programme d'ordinateur peuvent être stockées sur un support lisible par ordinateur pouvant diriger un dispositif informatique (e.g. ordinateur, serveur...), de sorte que les instructions stockées dans le support lisible par ordinateur produisent un dispositif informatique configuré pour mettre en œuvre l'invention.

Ainsi, des dispositif, système, procédé ou produit de programme d'ordinateur selon l'invention permettent outre la détection d'anomalies, de déterminer une valeur de risque de défaillance (i.e. d'incident technique) pour une infrastructure 5 informatique. Avantageusement l'invention permet de mettre en place une maintenance prédictive sur une infrastructure 5 informatique capable de permettre l'intervention du service de maintenance avant le déclenchement de l'interruption de service, de réduire ainsi les temps d'intervention du service de maintenance et de réduire l'occurrence des défaillances sur l'infrastructure informatique surveillée.

Cela est possible car contrairement à d'autres systèmes, l'invention comporte la détermination d'un risque de défaillance à partir de signaux faibles. Cela est particulièrement avantageux dans un contexte où l'anticipation des incidents est rendue complexe du fait de la grande variabilité des métriques de fonctionnement de ces infrastructures. Ici, l'enrichissement des indicateurs de performance en anomalie avec des données relatives à des indicateurs de performance à risque de devenir en anomalie permet de prévoir des défaillances à partir de signaux faibles qui auraient échappé aux services de suivi (ou qui ont déjà échappé à la vigilance des services de surveillances).

## Revendications

1. Procédé (100) de détermination d'une valeur de risque d'incident technique dans une infrastructure (5) informatique, ledit procédé étant exécuté par un dispositif (1) informatique, ledit dispositif (1) informatique comportant un module de traitement de données (10), un module de stockage (20) configuré pour mémoriser au moins une base (21) de corrélation, ladite base (21) de corrélation comportant des données de corrélation entre indicateurs de performance, et un module de collecte (40), ledit procédé comprenant :

   - une étape de réception (120), par le module de collecte (40), de valeurs d'indicateurs de performance d'une infrastructure (5) informatique,
   - une étape d'identification (140) d'indicateurs de performance en anomalie, par le module de traitement de données (10), ladite identification comportant une analyse des valeurs d'indicateurs de performance de façon à identifier des valeurs anormales et des indicateurs de performance associés à ces valeurs anormales,

- une étape de détermination (150) d'indicateurs à risque, par le module de traitement de données à partir de la base (21) de corrélation, ladite détermination comportant une identification d'indicateurs de performance de l'infrastructure (5) informatique corrélés aux indicateurs de performance en anomalie identifiés,
- une étape de création (160), par le module de traitement de données, d'un vecteur d'anomalies augmenté, ledit vecteur d'anomalies augmenté comportant des valeurs associées aux indicateurs de performance en anomalie identifiés et des valeurs associées aux indicateurs à risque déterminés, et
- une étape de détermination (170), par le module de traitement de données, d'une valeur de risque d'incident technique dans l'infrastructure (5) informatique, ladite étape de détermination comportant une comparaison du vecteur d'anomalies augmenté à des valeurs de références prédéterminées d'incident technique.

2. Procédé selon la revendication 1, **caractérisé en ce que** l'étape d'identification (140) d'indicateurs de performance en anomalie est précédée par une étape de prétraitement (130) de valeurs d'indicateurs de performance collectées, ladite étape de prétraitement (130) des valeurs d'indicateurs de performance collectées comportant une suppression d'une composante normale.

3. Procédé selon l'une des revendications 1 ou 2, **caractérisé en ce que** l'identification des valeurs anormales est réalisée par une méthode statistique permettant de générer des valeurs de distance à la normalité.

4. Procédé l'une quelconque des revendications précédentes, **caractérisé en ce que** les valeurs de références prédéterminées d'incident technique sont des vecteurs de références.

5. Procédé selon l'une quelconque des revendications précédentes, **caractérisé en ce que** l'étape d'identification d'indicateurs de performance de l'infrastructure informatique corrélés aux indicateurs en anomalie identifiés est réalisée sur la base de corrélations causales inter-indicateurs de performance.

6. Procédé selon l'une quelconque des revendications précédentes, **caractérisé en ce que** le vecteur d'anomalies augmenté comporte en outre des indicateurs à risque de deuxième niveau, lesdits indicateurs à risque de deuxième niveau étant des indicateurs de performance de l'infrastructure informatique corrélés aux indicateurs à risques.

7. Procédé selon l'une quelconque des revendications précédentes, **caractérisé en ce que** le vecteur d'anomalies augmenté comporte en outre pour chacun des indicateurs à risque, une valeur de durée estimée avant passage en anomalie.

8. Procédé selon la revendication 7, **caractérisé en ce qu'**il comporte en outre une étape de détermination d'une durée estimée avant un incident technique, ladite étape comportant un calcul, à partir de valeurs de durée avant passage en anomalie des indicateurs à risque identifiés, d'un plus court chemin entrainant un risque d'incident technique.

9. Procédé selon l'une quelconque des revendications 1 à 8, **caractérisé en ce qu'**il comporte en outre une étape (185) de détermination, par le module (10) de traitement de données, d'une valeur d'indice de performance de prédiction d'anomalies comportant :

- une réception de nouvelles valeurs d'indicateurs de performance de l'infrastructure informatique ;
- une identification de nouveaux indicateurs de performance en anomalie confirmés, ladite identification comportant une analyse des nouvelles valeurs d'indicateurs de performance de façon à identifier des valeurs anormales et des indicateurs de performance associés à ces valeurs anormales, et
- une comparaison des indicateurs à risque identifiés aux nouveaux indicateurs de performance en anomalie confirmés de façon à générer une valeur d'indice de performance de prédiction d'anomalies.

10. Procédé selon la revendication 9, **caractérisé en ce qu'**il comporte en outre une étape de génération de valeurs de durée avant passage en anomalie actualisées, une valeur de durée avant passage en anomalie correspondant à une durée entre une survenue d'une valeur anormale pour un premier indicateur de performance concerné et une survenue d'une valeur anormale pour un indicateur de performance corrélé au premier indicateur de performance concerné.

11. Procédé selon la revendication 10, **caractérisé en ce que** la base de corrélation (21) comporte des valeurs de durées avant passage en anomalie entre indicateurs de performance, et **en ce que** le procédé comporte en outre une étape de modification des valeurs de durées avant passage en anomalie entre indicateurs de performance mémorisées dans la base de corrélation (21) en fonction des valeurs de durée avant passage en anomalie actualisées.

12. Programme d'ordinateur pour la détermination d'une valeur de risque d'incident technique dans une infrastructure informatique apte à, de préférence configuré pour, faire exécuter un procédé de détermination selon l'une des revendications 1 à 11.

13. Support d'enregistrement sur lequel est enregistré le programme d'ordinateur pour la détermination d'une valeur de risque d'incident technique dans une infrastructure informatique selon la revendication 12.

14. Dispositif (1) informatique de détermination d'une valeur de risque d'incident technique dans une infrastructure informatique, ledit dispositif informatique comportant un module de traitement de données, un module de stockage configuré pour mémoriser au moins une base de corrélation comportant des données de corrélation entre indicateurs de performance et un module de collecte apte à, de préférence configuré pour, recevoir des valeurs d'indicateurs de performance de l'infrastructure informatique, ledit module de traitement de données étant configuré pour exécuter les étapes suivantes :

- une étape d'identification d'indicateurs de performance en anomalie, ladite identification comportant une analyse des valeurs d'indicateurs de performance de façon à identifier des valeurs anormales et des indicateurs de performance associés à ces valeurs anormales,
- une étape de détermination d'indicateurs à risque, à partir de la base de corrélation, ladite détermination comportant une identification d'indicateurs de performance de l'infrastructure informatique corrélés aux indicateurs en anomalie identifiés,
- une étape de création d'un vecteur d'anomalies augmenté, ledit vecteur d'anomalies augmenté comportant des données relatives aux indicateurs en anomalie identifiés et des valeurs associées aux indicateurs à risque déterminés, et
- une étape de détermination d'une valeur de risque d'incident technique, ladite étape de détermination comportant une comparaison du vecteur d'anomalies augmenté à des valeurs de références prédéterminées d'incident techniques.

100

| 110 | Procédure de calibration |
|-----|--------------------------|

| 120 | Réception de valeurs d'indicateurs de performance |
|-----|---------------------------------------------------|

| 130 | Prétraitement des valeurs d'indicateurs de performance |
|-----|--------------------------------------------------------|

| 140 | Identification d'indicateurs de performance en anomalie |
|-----|--------------------------------------------------------|

| 150 | Détermination d'indicateurs à risque |
|-----|--------------------------------------|

| 160 | Création d'un vecteur d'anomalies augmenté |
|-----|--------------------------------------------|

| 170 | Détermination d'une valeur de risque d'incident technique |
|-----|-----------------------------------------------------------|

| 180 | Détermination d'une durée estimée avant un incident technique |
|-----|---------------------------------------------------------------|

| 185 | Détermination d'une valeur d'indice de performance de la prédiction d'anomalie |
|-----|--------------------------------------------------------------------------------|

| 190 | Transmission et/ou affichage d'une valeur de risque d'incident technique |
|-----|--------------------------------------------------------------------------|

FIG. 1

**110**

**111** Détermination d'un profil de normalité en fonction du temps pour les indicateurs de performance.

**112** Détermination de valeurs de références utilisées lors de l'identification de valeurs anormales

**113** Détermination de corrélation inter-indicateurs de performance

**114** Détermination de valeurs de références utilisées lors d'une détermination d'une valeur de risque d'incident technique

**115** Détermination de valeurs de références utilisées lors d'une étape de calcul de la durée estimée avant défaillance ou incident technique

**FIG. 2**

**FIG. 3**

Europäisches Patentamt

European Patent Office

Office européen des brevets

# RAPPORT DE RECHERCHE EUROPEENNE

Numéro de la demande

EP 20 18 5822

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X<br>Y | US 2012/131674 A1 (WITTENSCHLAEGER THOMAS [US]) 24 mai 2012 (2012-05-24)<br>* abrégé *<br>* figures 2-4 *<br>* alinéa [0010] - alinéa [0012] *<br>* alinéa [0023] - alinéa [0025] *<br>* alinéa [0028] - alinéa [0031] *<br>* alinéa [0040] *<br>* alinéa [0044] *<br>* alinéa [0051] - alinéa [0052] *<br>----- | 1,3-9,<br>12-14<br>2,10,11 | INV.<br>G06F11/07<br>G06F11/34<br>G06N20/00<br><br>ADD.<br>G06F11/30 |
| Y | WO 2018/092073 A1 (ANODOT LTD [IL])<br>24 mai 2018 (2018-05-24)<br>* abrégé *<br>* alinéa [0011] *<br>----- | 2 | |
| Y | US 2014/195868 A1 (HASEGAWA HIDEO [JP])<br>10 juillet 2014 (2014-07-10)<br>* abrégé *<br>* alinéa [0091] *<br>----- | 10,11 | |

DOMAINES TECHNIQUES RECHERCHES (IPC)

G06F
G06N

Le présent rapport a été établi pour toutes les revendications

| Lieu de la recherche | Date d'achèvement de la recherche | Examinateur |
|---|---|---|
| Munich | 13 novembre 2020 | Lanchès, Philippe |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

...........................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 20 18 5822

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-11-2020

| Document brevet cité au rapport de recherche | Date de publication | Membre(s) de la famille de brevet(s) | Date de publication |
|---|---|---|---|
| US 2012131674 A1 | 24-05-2012 | EP     2641100 A1<br>US  2012131674 A1<br>US  2014165201 A1<br>US  2016044055 A1<br>US  2017214706 A1<br>US  2019238578 A1<br>US  2020228555 A1<br>WO  2012068443 A1 | 25-09-2013<br>24-05-2012<br>12-06-2014<br>11-02-2016<br>27-07-2017<br>01-08-2019<br>16-07-2020<br>24-05-2012 |
| WO 2018092073 A1 | 24-05-2018 | US  2018136994 A1<br>WO  2018092073 A1 | 17-05-2018<br>24-05-2018 |
| US 2014195868 A1 | 10-07-2014 | EP     2750041 A1<br>JP     5621937 B2<br>JP  WO2013027562 A1<br>US  2014195868 A1<br>US  2017046215 A1<br>WO  2013027562 A1 | 02-07-2014<br>12-11-2014<br>19-03-2015<br>10-07-2014<br>16-02-2017<br>28-02-2013 |

EPO FORM P0460

Pour tout renseignement concernant cette annexe : voir Journal Officiel de l'Office européen des brevets, No.12/82

**RÉFÉRENCES CITÉES DANS LA DESCRIPTION**

**Littérature non-brevet citée dans la description**

- **CLEVLAND et al.** A Seasonal-Trend Décomposition Procédure Based on Loess. *Journal of Officiai Statistics,* 1990, vol. 6 (I), 3-73